(19) Europäisches Patentamt
European Patent Office
Office européen des brevets

(11) EP 0 653 730 B1

(12) EUROPÄISCHE PATENTSCHRIFT

(45) Veröffentlichungstag und Bekanntmachung des Hinweises auf die Patenterteilung:
**07.01.1998 Patentblatt 1998/02**

(51) Int Cl.[6]: **G07C 5/08**

(21) Anmeldenummer: **94116943.5**

(22) Anmeldetag: **26.10.1994**

(54) **Verfahren und Vorrichtung zur Bewertung der Fahrweise mit einem Kraftfahrzeug**

Method and device for evaluating the manner of driving a motor vehicle

Procédé et dispositif pour évaluer la conduite avec un véhicule automobile

(84) Benannte Vertragsstaaten:
**FR GB IT NL SE**

(30) Priorität: **08.11.1993 DE 4338073**

(43) Veröffentlichungstag der Anmeldung:
**17.05.1995 Patentblatt 1995/20**

(73) Patentinhaber: **DAIMLER-BENZ AKTIENGESELLSCHAFT**
**70567 Stuttgart (DE)**

(72) Erfinder:
- **Braun, Fritz**
  **D-71394 Kernen (DE)**
- **Borenius, Gunnar, Dr.**
  **D-73773 Aichwald (DE)**
- **Merholz, Michael**
  **D-71397 Leutenbach (DE)**

(56) Entgegenhaltungen:

| | |
|---|---|
| **EP-A- 0 144 608** | **EP-A- 0 471 102** |
| **WO-A-93/00535** | **DE-A- 3 146 711** |
| **DE-A- 3 304 847** | **DE-A- 3 827 091** |
| **DE-A- 3 912 359** | **DE-A- 3 933 295** |
| **DE-A- 4 033 574** | **DE-A- 4 136 613** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 653 730 B1

Printed by Jouve, 75001 PARIS (FR)

## Beschreibung

Die Erfindung bezieht sich auf ein Verfahren zur Bewertung der Fahrweise mit einem Kraftfahrzeug nach dem Oberbegriff des Patentanspruchs 1 sowie auf eine Vorrichtung zur Fahrweisenbewertung, die zur Durchführung eines solchen Verfahrens geeignet ist.

Derartige Verfahren und Vorrichtungen dienen zur Beurteilung des Fahrverhaltens eines Kraftfahrzeugführers und ermöglichen eine gezielte Erziehung des Fahrers zu einer gewünschten Fahrweise, insbesondere einer kraftstoffsparenden und materialschonenden Fahrweise. Aus betriebswirtschaftlichen Untersuchungen von Nutzfahrzeugeinsätzen ist es bekannt, daß zur Erzielung eines wirtschaftlichen Fahrzeugeinsatzes die zügige Bewältigung der Transportstrekke ebenso wichtig ist wie die dabei verbrauchten Betriebsmittel, wie Kraftstoff, Bremsbeläge, Schmierstoffe u.dgl. Im Sinne einer gesamtwirtschaftlich optimalen Fahrweise sind also Fahrstrecken in möglichst kurzer Zeit bei möglichst materialschonender und betriebsmittelschonender Fahrweise zu überbrücken.

Es ist bekannt, daß beispielsweise Speditionen zu diesem Zweck ihre Nutzfahrzeuge mit Kraftstoffverbrauchsmeßgeräten ausrüsten, um den Kraftstoffverbrauch zur Fahrerbeurteilung heranzuziehen. Der Kraftstoffverbrauch eines bestimmten Nutzfahrzeuges ist jedoch in wesentlich stärkerem Maße vom Fahrzeuggesamtgewicht, vom geodätischen Fahrstreckenprofil und von den Verkehrsverhältnissen als von der fahrerbeinflußbaren Fahrweise abhängig. Diese Störeinflüsse sind nur unzureichend zu eliminieren, so daß ein derartiges Bewertungssystem unbefriedigend bleibt. Insbesondere sagt dieses Vorgehen beispielsweise nichts über das Bremsverhalten des Fahrzeugführers aus. Darüber hinaus sind genaue Kraftstoffverbrauchsmeßeinrichtungen verhältnismäßig aufwendig.

Aus der DE-31 46 711 C2 ist eine Vorrichtung zur Auswertung und Anzeige der Fahrweise mit einem Kraftfahrzeug bekannt, die unter anderem einen Rechner, verschiedene Fahrbetriebszustände erfassende Meßfühler, einen externen Speicher sowie Mittel zur Fahreridentifikation beinhaltet. Das von dieser Vorrichtung durchführbare Bewertungsverfahren sieht mehrere Zähler vor, die jeweils die Zeitdauern erfassen, während denen die Fahrzeuggeschwindigkeit, die Beschleunigung, die Maschinendrehzahl in einer ersten Gruppe von Getriebeschaltstellungen sowie die Maschinendrehzahl in einer zweiten Gruppe von Getriebeschaltstellungen jeweils vorgebbare Schwellwerte im Fahrbetrieb überschreiten. Immer wenn der Zählwert eines Zählers einen voreingestellten Grenzwert übersteigt, wird ein Warnsignal abgegeben, wobei die Anzahl der in den verschiedenen Fahrzuständen erfolgten Warnsignale erfaßt wird.

Aus der DE 39 12 359 A1 ist eine Schalthilfe-Informationseinrichtung für von Hand zu schaltende Kraftfahrzeuge bekannt, die eine Einrichtung zur visuellen und/oder akkustischen Ausgabe von Schaltempfehlungen an den Fahrer sowie eine elektronische Recheneinrichtung umfaßt, mit der auf der Basis von im laufenden Fahrbetrieb erfaßten Daten über die Motordrehzahl, die Fahrgeschwindigkeit, den eingelegten Gang und die Fahrpedalstellung auf der Basis abgelegter Kraftstoffverbrauchs- und Abgaskennfelder Werte für eine entsprechend optimierte Fahrweise errechnet und in entsprechende Schaltempfehlungssignale umgesetzt werden.

In der DE 38 75 405 T2 wird ein Verfahren zum Erfassen und zum Lesen von Daten zur Analyse der Führungsweise eines Straßenfahrzeuges beschrieben, bei dem in jeweiligen Folgen jeweils eine Information über die Taktzahl eines sich drehenden Teils vor der Kupplung, die Anzahl der Umdrehungen pro Sekunde eines sich drehenden Teils nach dem Getriebe, ob gebremst wird oder nicht, ob Kraftstoff zugeführt wird oder nicht sowie über die Zeit seit Verfahrensaktivierung aufgezeichnet wird. Durch Lesen dieser aufgezeichneten Informationen lassen sich anschließend das Verhältnis der in Eingriff gekommenen Zahnräder im Getriebe, die Beschleunigungen, der eventuelle Einsatz der Motorbremse, die Geschwindigkeitsabnahmen, die Aufzeichnung eines eventuellen Bremseneinsatzes und die Zuführung von Kraftstoff bestimmen.

Gemäß der DE-A-33 04 847 wird das Leistungs-Drehzahl-Kennlinienfeld einer Brennkraftmaschine in einen günstigen und einen ungünstigen Arbeitsbereich aufgeteilt, um ein Hochschaltsignal für ein zugeordnetes Getriebe zu erzeugen.

Der Erfindung liegt als technisches Problem die Bereitstellung eines Verfahrens und einer Vorrichtung zur Fahrweisenbewertung zugrunde, die bei verhältnismäßig geringem Aufwand eine objektive Beurteilung der fahrerverantwortbaren Fahrweise eines Kraftfahrzeuges, insbesondere unbeeinflußt von Fahrzeuggewicht, geodätischem Straßenprofil, Verkehrsverhältnissen und Fahrzeugtyp, erlauben.

Dieses Problem wird durch ein Verfahren mit den Merkmalen des Patentanspruchs 1 sowie eine Vorrichtung mit den Merkmalen des Patentanspruchs 14 gelöst. Dieses Verfahren erlaubt eine differenzierte Bewertung der Fahrweise, soweit sie vom Fahrer beeinflußbar ist, und ermöglicht dadurch auch beispielsweise eine objektive Zuteilung von belohnenden Fahrprämien. Die Unterteilung der Fahrzustände in einen motorbelasteten Zugbetrieb und einen Schub-/Bremsbetrieb mit zugeordneten Bewertungsziffern sowie das Vorsehen einer weiteren Bewertungsziffer über die Fahrzeugverzögerung, d.h. das allgemeine Bremsverhalten des Fahrers, erlaubt eine objektive Bewertung der fahrerbeeinflußten Fahrweise und damit eine gezielte Schulung und/oder objektive Belohnung des Fahrers, z.B. durch Fahrprämien. Die Bewertungsziffern hinsichtlich Schub-/Bremsbetrieb sowie hinsichtlich allgemeinem Bremsverhalten dienen dazu, im motorlastfreien Fahrbetrieb eine vorausschauende Fahrweise zu erreichen, abruptes Abbremsen zu vermeiden und möglichst die verschleißfreien Betriebsbremsen einzusetzen und die verschleißenden Betriebsbremsen zu schonen. Das Verfahren berücksichtigt nicht nur die Motorgegebenheiten, sondern bezieht auch verkehrs- und straßenbezogene Anforderungen an das Fahrverhalten hinsichtlich verschiedener Transportaufgaben, Streckenführungen und Verkehrszuständen in die Betrachtung mit ein. Es wird beispielsweise berücksichtigt, daß das Schwungholen vor einer Steigung kurzfristig das Fahren in einem ungünstigen Bereich erfordert, um dennoch bezogen auf Gesamtfahrzeit und Gesamtverbrauch ein Optimum zu erhalten. Die Vorrichtung zur Fahrweisenbewertung erlaubt es, die Fahrweisen verschiedener Fahrer getrennt zu bewerten, wozu Mittel zur Fahreridentifikation und ein geeignetes Steuergerät zur Verfahrensdurchführung vorgesehen sind.

Die Realisierung einer optimal differenzierten Fahrweisenbewertung im Zugbetrieb läßt sich vorteilhaft durch eine Weiterbildung der Erfindung nach Anspruch 2 verwirklichen, insbesondere durch die Wahl geeigneter Gewichtungsfaktoren für das jeweilige Feld der Drehzahl-Motorlast-Kennfeldmatrix. In analoger Weise wird eine differenzierte Fahrweisenbeurteilung für den motorlastfreien Betrieb sowie für das allgemeine Fahrerbremsverhalten bevorzugt durch Unterteilung des Motordrehzahl- bzw. Verzögerungswertebereiches in mehrere Teilbereiche und Zuordnung jeweiliger Gewichtungsfaktoren gemäß Weiterbildungen der Erfindung nach Anspruch 5 bzw. Anspruch 8 ermöglicht. Die den jeweiligen Feldern bzw. Teilbereichen zugeordneten Anteilswerte können Anteile an einer Gesamtfahrzeit, an einer Gesamtfahrstrecke oder an einer Gesamtzahl von Motorumdrehungen während einer Fahrt darstellen, wozu die Bewertung entsprechend in getakteten Intervallen der Fahrzeit, der Fahrstrecke oder der Motorumdrehungen durchgeführt wird. Zur Motorlastsensierung können einfache Schalter am Fahrpedal, im Gasgestänge oder an der Kraftstoffeinspritzung bzw. dem Vergaser angebracht sein. Alternativ können auch ein- oder mehrstufige Lastsignale oder proportionale Lastmeßwerte aus anderen Elektroniken, soweit sie vorhanden sind, wie z.B. modernen elektronischen Motormanagementelektroniken, übernommen oder mit einem üblichen Proportionalsensor direkt erfaßt werden. Zur Motordrehzahlsensierung sind die üblichen Methoden anwendbar.

Solange die Zugkraft ausreicht, ist im Zugbetrieb, d.h. bei angetriebenem Fahrzustand, der höchste Gang immer der wirtschaftlich geeignetste Gang, wenn beispielsweise die Begrenzung der Fahrgeschwindigkeit bei Nutzfahrzeugen und der Wunsch nach höchstmöglicher Durchschnittsgeschwindigkeit berücksichtigt wird. Diesem Umstand trägt eine Ausgestaltung der Erfindung nach Anspruch 3 Rechnung, indem im höchsten Gang des Schaltgetriebes keine Bewertung der Fahrweise im Zugebetrieb durchgeführt wird. Fehlende Zugkraft und die daraus resultierende Notwendigkeit einer Zurückschaltung in einen niedrigeren Gang ist vom Fahrer selbst sehr einfach aus dem Absinken der Motordrehzahl erkennbar, ohne daß er hierfür einer besonderen Anweisung bedarf. Ist jedoch ein Gang unterhalb des höchsten Ganges eingelegt, so kann eine Bewertung dahingehend erfolgen, daß vorzugsweise die wirtschaftlichen Betriebszustände benutzt werden sollen, was im allgemeinen eine Vermeidung von Teillastbetrieb des Antriebsmotors in höheren Drehzahlen bedeutet. Hier ist ein höherer Gang mit niedrigeren Drehzahlen immer günstiger, solange die maximal verfügbare Zugkraft hierfür ausreicht.

Mit einer Ausgestaltung der Erfindung nach Anspruch 4 ist es möglich, mit dem Fahrweisenbewertungsverfahren direkt den laufenden Fahrbetrieb dadurch zu beeinflußen, daß dem Fahrer durch ein Ganghochschalt-Anzeigesignal angezeigt wird, daß er bereits längere Zeit in einem ungünstigen Bereich fährt und zur Verbesserung der Fahrweise ein höherer Gang eingelegt werden sollte.

Eine vorteilhafte Weiterbildung der Erfindung nach Anspruch 6 erlaubt eine direkte Beeinflußung des Fahrverhaltens im Schub-/Bremsbetrieb, indem bei aktivierter Betriebsbremse dem Fahrer ein Gangrückschalt-Anzeigesignal angezeigt wird, wenn er in einem ungünstigen Bereich, d.h. meist bei zu niedriger Drehzahl, fährt. Die Aktivierung der Betriebsbremse kann beispielsweise mittels eines Bremslichtschaltersignals erkannt werden.

Die Ausgestaltung der Erfindung nach Anspruch 7 hat den Vorteil, daß durch das Erfassen der Fahrbetriebabschnitte im Bremsbetrieb in ungünstigen Drehzahlbereichen eine entsprechende Gangrückschalt-Anzeigesignalgenerierung häufigen kurzen Anpassungsbremsungen mit der verschleißenden Betriebsbremse entgegenwirkt. Der Fahrer wird aufgefordert, einen niedrigeren Gang zu verwenden, in welchem die Bremswirkung des Motors oder einer anderen verschleißfreien Bremse höher ist, so daß die verschleißende Betriebsbremse nicht benötigt wird.

Durch eine Ausgestaltung der Erfindung nach Anspruch 9 kann die Fahrweisenbewertung vom Benutzer geeignet an den jeweiligen Anwendungsfall angepaßt werden, z.B. an die speziellen Bedürfnisse eines bestimmten Fuhrparkes oder an unterschiedliche Fahrzeugtypen.

Mit einer Weiterbildung der Erfindung nach Anspruch 10 kann der Fahrer auf Wunsch die Anzeigesignale zum Einlegen eines anderen Ganges abschalten und diese damit unberücksichtigt lassen.

In Ausgestaltung der Erfindung nach Anspruch 11 ist die Bildung einer Gesamtbewertungsziffer als gewichteter Mittelwert der drei einzelnen Bewertungsziffern vorgesehen, so daß die Fahrweisenqualität anhand dieser einen Ziffer beurteilbar ist, wobei die einzelnen Fahrbetriebsweisen durch entsprechende Gewichtung ihrer Bewertungsziffern in einem jeweils gewünschten Maße Berücksichtigung finden.

Eine Weiterbildung der Erfindung nach Anspruch 12 bietet die Möglichkeit, dem Fahrer die einzelnen Bewertungsziffern und/oder die Gesamtbewertungsziffer automatisch anzuzeigen. Alternativ ist in Ausgestaltung der Erfindung nach Anspruch 13 vorgesehen, die Bewertungsziffern nur auf Fahreraufforderung hin anzuzeigen, so daß beispielsweise der Fahrer diese in größeren Zeitabständen abrufen kann.

In einer Ausgestaltung der Erfindung nach Anspruch 15 besitzt die Fahrweisenbewertungsvorrichtung eine fahrerseitig betätigbare Schalteinrichtung als Mittel zur Fahreridentifikation, mittels der der Fahrer das ihm zugehörige Bewertungsverfahren einschalten kann. Alternativ dazu ist in Weiterbildung der Erfindung nach Anspruch 16 für ein Fahrzeug mit einem Tachographen vorgesehen, diesen als Mittel zur Fahreridentifizierung zu nutzen, wobei das zum jeweiligen Fahrer gehörende Bewertungsverfahren durch ein entsprechendes Signal vom Tachographen an das verfahrensdurchführende Steuergerät von letzterem ausgelöst wird. Als weitere Alternative bietet die Ausgestaltung der Erfindung nach Anspruch 17 eine Fahreridentifizierung mittels eines elektronischen Datenträgers, z.B. einer Chipkarte, dessen Daten beispielsweise von einem verfahrensdurchführenden Rechner gelesen werden können.

Vorteilhafte Möglichkeiten der Datenübergabe zur Fahrweisenbewertung aus einem verfahrensdurchführenden Rechner sind durch eine Weiterbildung der Erfindung nach Anspruch 18 gegeben. Insbesondere ist es dadurch möglich, die Daten per Funk an eine Leitstelle oder Zentrale zu übertragen.

Die Weiterbildung der Erfindung nach Anspruch 19 erlaubt das Rücksetzen gespeicherter Eingangs- und/oder Ausgangsdaten nach einem Auslesevorgang, so daß das System zur Bewertung eines neuen Fahrabschnitts bereit ist.

Eine vorteilhafte Ausführungsform der Erfindung ist in den Zeichnungen dargestellt und wird nachfolgend beschrieben. Es zeigen:

Fig. 1 ein Flußdiagramm des Verfahrensablaufs für eine Bewertung der Fahrweise eines Kraftfahrzeuges im Zugbetrieb,

Fig. 2 eine Motorlast-Drehzahl-Gewichtungsfaktormatrix zur Verwendung bei der Fahrweisenbewertung nach Fig. 1,

Fig. 3 eine Motorlast-Drehzahl-Anteilswertmatrix zur Bewertung nach Fig. 1,

Fig. 4 ein Flußdiagramm des Verfahrensablaufs für die Fahrweisenbewertung im Schub-/Bremsbetrieb,

Fig. 5 einen Gewichtungsfaktorvektor zur Gewichtung verschiedener Motordrehzahlteilbereiche für die Bewertung nach Fig. 4,

Fig. 6 einen Anteilswertvektor über die Häufigkeit der motorlastfreien Betriebsfahrdauer in den unterschiedlichen Motordrehzahlteilbereichen von Fig. 5 zur Bewertung gemäß Fig. 4,

Fig. 7 ein Flußdiagram über den Verfahrensablauf zur Bewertung des allgemeinen Fahrerbremsverhaltens,

Fig. 8 einen Gewichtungsfaktorvektor zur Gewichtung verschiedener Verzögerungsteilbereiche für die Bewertung des allgemeinen Bremsverhaltens nach Fig. 7,

Fig. 9 einen Anteilswertvektor über die Häufigkeit der Fahrdauer in den verschiedenen Verzögerungsteilbereichen von Fig. 8 zur Bewertung nach Fig. 7,

Fig. 10 ein ausschnittweises Flußdiagramm über den allgemeinen Verfahrensablauf bei Bewertung mehrerer Fahrer des Fahrzeugs,

Fig. 11 ein ausschnittweises Flußdiagramm über den Verfahrensablauf zur Anzeige einer Fahrerbewertung und

Fig. 12 ein Blockdiagramm einer Vorrichtung zur Fahrweisenbewertung.

Das nachfolgend beschriebene Verfahren sieht eine Fahrweisenbewertung anhand dreier Einzelbewertungsziffern (B1, B2, B3) vor, mit denen getrennt das Fahrverhalten im Zugbetrieb, d.h. bei einem Motorlastzustand größer null, und im Schub-/Bremsbetrieb sowie das allgemeine Bremsverhalten des Fahrzeugführers bewertet werden. Die Ermittlung der ersten Bewertungsziffer (B1) für den Zugbetrieb wird anhand der Fig. 1 bis 3, der zweiten Bewertungsziffer (B2) für den Schub-/Bremsbetrieb anhand der Fig. 4 bis 6 und der dritten Bewertungsziffer (B3) anhand der Fig. 7 bis 9 näher erläutert.

Zuvor wird anhand Fig. 12 eine Vorrichtung beschrieben, die sich zur Durchführung des Bewertungsverfahrens eignet. Zentraler Teil ist ein Steuergerät (50), das einen Rechner und übliche Peripheriekomponenten beinhaltet. Als Steuergerät ist beispielsweise eines vom Typ FMS 1332 der Firma Mannesmann-Kienzle verwendbar. Ein Ausgang des Steuergeräts (50) führt zu einer Eingabe/Ausgabe-Einrichtung (51), die der Anzeige der Gesamt-bzw. Einzelbewertungen sowie der Datenweitergabe an externe Einrichtungen, z.B. einen elektronischen Datenträger und/oder eine Mobilfunkanlage, dient. An zwei weiteren Ausgängen des Steuergerätes (50) ist eine Gangrückschalt-Meldelampe (52) sowie eine Ganghochschalt-Meldelampe (53) angeschlossen, die aufleuchten, wenn das Steuergerät (50) das entsprechende Gangrückschalt- oder Ganghochschalt-Anzeigesignal generiert. Die Anzeige einer solchen Schaltempfehlung ist mittels eines Ein-/Ausschalters (54), der einen entsprechenden Steuergeräteingang beaufschlagt, aktivierbar und deaktivierbar.

Des weiteren sind zwei Versorgungsleitungen (55, 56) und eine Zündungsleitung (57) zum Steuergerät (50) geführt. Zur Abtastung der Fahrpedalstellung ist ein Schalter (58) zur Erkennung der Leergasstellung sowie ein Schalter (59) zur Erkennung einer 3/4-Motorlast angeordnet, deren Stellung vom Steuergerät (50) ausgewertet wird. Zur Erkennung der Betriebsbremsenaktivierung ist ein am Fahrzeug angeordneter Bremslichtschalter (60) ebenfalls an das Steuergerät (50) angeschlossen. An zwei weiteren Eingängen sind dem Steuergerät (50) Signalleitungen (61, 62) von einem Tachographen zur Fahreridentifizierung und von einer Lichtmaschine des Kraftfahrzeugs zugeführt. Damit wird der jeweilige Fahrer identifiziert, so daß die Bewertung getrennt für mehrere, das Fahrzeug abwechselnd nutzende Fahrer, wie dies bei Nutzfahrzeugen häufig der Fall ist, erfolgen kann. Zur Realisierung dieser Bewertung mehrerer Fahrer besitzt das Steuergerät (50) geeignete, nicht näher gezeigte Einheiten zur getrennten Speicherung und Abrufung der jedem Fahrer spezifisch zugeordneten Daten.

Die Verfahrensabfolge zur Ermittlung der ersten Bewertungsziffer (B1), die die Fahrweise im Zugbetrieb repräsentiert, ist im Flußdiagramm der Fig. 1 dargestellt. Zu Beginn (Schritt 1) wird eine Fahreridentifikation durchgeführt. Dies erfolgt automatisch durch ein entsprechendes Signal, das vom Tachographen des Fahrzeugs über die Signalleitung (61) an einen Eingang des Steuergeräterechners übertragen wird und automatisch die Einschaltung des zum aktuellen Fahrer gehörenden Bewertungsverfahrens auslöst, indem der Rechner die speziell diesem Fahrer zugeordnet abgespeicherten Daten für die weitere Verfahrensdurchführung abruft. Alternativ kann vorgesehen sein, daß der Fahrzeugführer einen hierzu vorgesehenen Schalter, z.B. einen Drehoder einen Tastschalter, in eine für ihn vorgesehene Schalterstellung bringt, die vom Steuergerät erfaßt wird, woraufhin dieses das für diesen Fahrer vorgesehene spezifische Bewertungsverfahren auswählt. Als weitere Alternative ist eine Fahreridentifikation mittels eines elektronischen Datenträgers vorsehbar, z.B. mittels fahrerspezifisch ausgegebener Chipkarten, die in das Steuergerät eingeführt und von diesem auslesbar sind, oder mittels Verwendung von Datenschlüsseln.

Anschließend (Schritt 2) werden der Taktmodus sowie der Anzahlmodus für den Verfahrensdurchlauf festgesetzt und die erforderlichen Eingangsparameter einschließlich der für den jeweiligen Fahrer in früheren Fahrten bereits ermittelten Bewertungsdaten aktiviert. Durch den Taktmodus wird festgelegt, wodurch ein nächster Verfahrenstakt ausgelöst wird. Vorliegend wird als Taktmodus ein konstantes Zeitinkrement gewählt, d.h. ein neuer Verfahrenstakt wird nach Ablauf einer vorgegebenen Zeitdauer gestartet. Alternativ kann zur Auslösung eines neuen Verfahrenstaktes ein konstantes Fahrtweginkrement oder ein konstantes Motordrehzahlinkrement gewählt werden.

Dann folgt eine Geschwindigkeitsabfrage (Schritt 3), die darüber Auskunft gibt, ob sich das Fahrzeug im Fahrbetrieb befindet. Die Ermittlung der Geschwindigkeit erfolgt mit einer üblichen Methode, z.B. durch Auswertung sensierter Raddrehzahlen. Wird ermittelt, daß die Fahrzeuggeschwindigkeit nicht größer als null ist, so wird vor den Schritt 2 zur Durchführung eines neuen Taktes der Verfahrensdurchführung zurückgekehrt. Wird hingegen eine Fahrzeuggeschwindigkeit größer als null ermittelt, so werden die zur weiteren Auswertung benötigten folgenden Größen sensiert. Erstens der Lastzustand der Antriebsmaschine, wozu vorliegend die Anordnung der Erkennungsschalter (58, 59) am Fahrpedal dient. Alternativ können solche Schalter auch im Gasgestänge, an der Kraftstoffeinspritzung oder am Vergaser angebracht sein. Eine genauere Lastzustandserfassung kann erforderlichenfalls auch durch Benutzung ein- oder mehrstufiger Lastsignale oder proportionaler Lastmeßwerte aus anderen Fahrzeugelektronikeinrichtungen, soweit vorhanden, wie z.B. modernen elektronischen Motormanagement-Elektronikeinrichtungen, übernommen oder mit einem Proportionalsensor üblicher Bauart direkt erfaßt werden. Zweitens der Bremszustand, wozu die Bremspedalstellung erfaßt wird. Drittens die vorliegende Motordrehzahl, die nach einer üblichen Methode analog oder digital erfaßt wird. Viertens den eingelegten Gang des Schaltgetriebes, insbesondere die Information darüber, ob der höchste Gang eingelegt ist. Dies wird aus der Relation von Motordrehzahl und Fahrgeschwindigkeit oder Gelenkwellendrehzahl ermittelt. Alternativ kann diese Information von einer gegebenenfalls vorhandenen Elektronik, die den eingelegten Gang kennt, z.B. einer Schalteleketronik, über eine geeignete Rechnerschnittstelle eingespeist werden.

Bei der anschließenden Abfrage (Schritt 5) wird geprüft, ob die Fahrpedalstellung größer als null ist, was als Motorlastzustand größer null und damit als Zugbetrieb des Fahrzeugs erkannt wird. Liegt kein Zugbetrieb vor, wird der Verfahrenstaktdurchlauf beendet und vor Schritt 2 zur Durchführung des nächsten Taktes zurückgekehrt. Liegt hingegen Zugbetrieb vor, so findet eine Abfrage statt (Schritt 6), ob der eingelegte Gang niedriger als der höchste Gang des Schaltgetriebes ist. Wenn nein, wird wiederum zum Ausgangspunkt vor Schritt 2 für den nächsten Taktdurchlauf zurückgekehrt. Wenn ja, findet anschließend eine Bewertung statt (Schritt 7), die durch die Fig. 2 und 3 illustriert ist.

Für diese Bewertung des Zugbetriebs werden vom Steuergerät der Motorlastbereich in eine Anzahl Nz und der Motordrehzahlbereich in eine Anzahl Mz Teilbereichen unterteilt, so daß die in den Fig. 2 und 3 dargestellte Last-Drehzahl-Kennfeldmatrix entsteht, wobei Nz und Mz jeweils natürliche Zahlen größer als eins sind. Eine gut geeignete Einteilung sieht beispielhaft Mz=4 und Nz=2, d.h. vier Motordrehzahlbereiche und zwei Motorlastbereiche, vor. Jedoch ist auch jede andere Einteilung auf Wunsch möglich. Zur Bewertung der momentanen Fahrweise wird zunächst die in Fig. 2 gezeigte Last-Drehzahl-Gewichtungsfaktormatrix dadurch gebildet, daß jeder Kombination aus einem Lastbereich (i; i=1, ..., Nz) und einem Drehzahlbereich (j; j=1, ..., Mz) ein Gewichtungsfaktormatrixelement ($GFz_{ij}$) zugeordnet wird. Diese im Steuergerät (50) abspeicherbaren Gewichtungsfaktoren ($GFz_{ij}$) werden von praktischen Fahranforderungen unter Beachtung des Kraftstoffverbrauchskennfeldes des Motors abgeleitet. Matrixelemente, die zu Last-Drehzahl-Matrixfeldern gehören, in denen der Fahrer die Antriebsmaschine betreiben soll, erhalten Gewichtungsfaktoren gleich oder größer als eins, während Last-Drehzahl-Bereichsfelder, in denen die Antriebsmaschine möglichst nicht betrieben werden sollte, mit Gewichtungsfaktoren kleiner als eins belegt werden. Durch die Wahl dieser Last-Drehzahl-Gewichtungsfaktormatrix mit den vorgebbaren Gewichtungsfaktoren ($GFz_{ij}$) ist somit die angestrebte Fahrweise einstellbar. Die Last-Drehzahl-Gewichtungsfaktormatrix nach Fig. 2 bleibt während der Bewertung konstant und läßt sich insbesondere auf den jeweiligen Fahrzeugtyp anpassen.

Die Fahrweisenbewertung für den Zugbetrieb erfolgt unter Benutzung dieser Last-Drehzahl-Gewichtungsfaktormatrix in Verbindung mit der in Fig. 3 gezeigten Last-Drehzahl-Anteilswertmatrix, aus der sich die Häufigkeit ergibt, mit der im jeweiligen Last-Drehzahl-Bereichsfeld gefahren wurde. Im Detail besteht diese Anteilswertmatrix wiederum aus Matrixelementen ($Bz_{ij}$) für jedes Bereichsfeld (i,j;i=1,...,Nz;j=1,...,Mz). Im Bewertungsschritt (7) wird vom Steuergerät (50) ermittelt, in welchem Last-Drehzahl-Bereichsfeld (i, j) der Zugbetrieb aktuell stattfindet. Dann wird das Anteilswert-Matrixelement ($Bz_{ij}$) des ermittelten Bereichsfeldes (i, j) als ein Zählwert um ein Inkrement ($dBz_{ij}$) erhöht, wobei eine einfache Wahl des Inkrementes durch den Wert eins gegeben ist, d.h. $dBz_{ij}=1$, nachdem zu Beginn des Bewertungsverfahrens alle Zählwertmatrixelemente ($Bz_{ij}$) auf null gesetzt wurden. Alternativ kann selbstverständlich für das Zählwertinkrement ($dBz_{ij}$) jeder beliebige Wert gewählt werden. Das Inkrement ($dBz_{ij}$) wird zu dem für das betreffende Bereichsfeld (i, j) im bisherigen Verfahrensablauf bereits ermittelten Zählwert ($Bz_{ij}$) hinzuaddiert und dadurch das neue gültige Zählwert-Matrixelement ($Bz_{ij}$) gebildet. Jeder Durchlauf des in Fig. 1 dargestellten Verfahrenstaktes zur Zugbetriebbewertung ergibt daher eine Erhöhung desjenigen Zählwertes ($BZ_{ij}$), der dem aktuell vorliegenden Last-Drehzahl-Bereichsfeld (i, j) zugeordnet ist.

Aus der Information der Last-Drehzahl-Gewichtungsfaktormatrix nach Fig. 2 und der Last-Drehzahl-Zählwertmatrix nach Fig. 3 läßt sich die erste Bewertungsziffer (Bl) für die Fahrweise im Zugbetrieb dadurch ermitteln, daß jedes Zählwert-Matrixelement ($Bz_{ij}$) mit dem zugehörigen Gewichtungsfaktor-Matrixelement ($GFz_{ij}$) multipliziert wird und anschließend die erhaltenen Produkte aufsummiert werden und die Summe durch die Summe aller Zählwerte ($BZ_{ij}$) dividiert wird, d.h.

$$B1=(Bz_{11}GFz_{11}+...+Bz_{NzMz}GFz_{NzMz})/(Bz_{11}+...+Bz_{NzMz}).$$

Je höher die erste Bewertungsziffer, um so besser entspricht die verwendete Fahrweise dem angestrebten Fahrzustand. Selbstverständlich ist auch ein inverses Bewertungsschema möglich, bei dem die nicht angestrebten Last-Drehzahl-Bereichsfelder Gewichtungsfaktoren größer als eins und die angestrebten Fahrzustände gleich oder kleiner als eins erhalten, wobei dann eine möglichst kleine Bewertungsziffer (B1) anzustreben ist.

Nach dem Bewertungsschritt (7) von Fig. 1 sind innerhalb eines Zugbetrieb-Bewertungstaktes weitere Schritte für eine eventuelle direkte Fahrerinformation wie folgt vorgesehen. Zunächst wird nach der Bewertung abgefragt (Schritt 8), ob der Gewichtungsfaktor ($GFz_{ij}$), der zu dem für den aktuell ermittelten Fahrbetrieb gehörigen Last-Drehzahl-Bereichsfeld (i, j) gehört, kleiner als eins ist, ob also der momentane Zugbetrieb in einem nicht angestrebten Last-Drehzahl-Bereichsfeld liegt. Ist dies der Fall, so wird als nächstes (Schritt 9) ein anfangs auf null gesetzter Ganghochschalt-Zählwert (Zz) inkremental um eins erhöht und daraufhin (Schritt 10) abgefragt, ob dieser Zählwert (Zz) größer als ein vorgegebener Ganghochschalt-Grenzwert (Gz) geworden ist. Ist dies noch nicht der Fall, so wird zu einem Datenausgabeschritt (Schritt 13) gesprungen, in welchem die Ausgabe der Daten vorgesehen ist und von dem aus dann an den Taktanfang vor Schritt 2 zur Durchführung des nächsten Verfahrenstaktes zurückgekehrt wird. Bei dieser Datenausgabe kann sowohl die Ausgabe der einzelnen Matrixelemente ($GFz_{ij}$, $Bz_{ij}$) als auch der ersten Bewertungsziffer (B1) über eine geeignete Rechnerschnittstelle an eine Speichereinheit, z.B. eine mobile Speichereinheit in Form einer Chipkarte oder eines Handterminals, oder auch an einen speziellen handelsüblichen Rechner vorgesehen werden. Mit einer solchen mobilen Speichereinheit können die Daten dann an eine Zentrale weiterübertragen und dort weiterverwertet werden. Hat hingegen der Zählwert (Zz) den Grenzwert (Gz) überschritten, so gibt das Steuergerät (50) ein Ganghochschalt-Anzeigesignal ab, das zu einer entsprechenden Anzeige für den Fahrer führt, und zwar über die Meldelampe (53) oder alternativ an einem optischen Anzeigefeld oder einer akustischen Anzeige. Dies informiert den Fahrer darüber, daß er bereits eine durch den Grenzwert (Gz) festgelegte Dauer in einem nicht erwünschten Zugbetriebzustand fährt, was im Zugbetrieb bedeutet, daß er einen zu niedrigen Gang eingelegt hat. Mit dem Ganghochschalt-Anzeigesignal wird der Fahrer zum Einlegen eines höheren Gangs aufgefordert, wodurch sich eine günstigere Fahrweise ergibt. Nach Auslösung des Ganghochschalt-Anzeigesignals wird der entsprechende Ganghochschalt-Zählwert (Zz) wieder auf null zurückgesetzt (Schritt 12), wonach durch den Zähler (Zz) erneut die Fahrdauer in nicht angestrebten Zugbetriebs-Fahrzuständen erfaßbar ist. Zu diesem Zählerrücksetzschritt (12) wird auch dann gesprungen, wenn bei der Abfrage des Gewichtungsfaktorwertes ($GFz_{ij}$) (Schritt 8) festgestellt wurde, daß dieser nicht kleiner als eins ist und folglich der Zugbetrieb immer noch oder wieder in einem günstigen Last-Drehzahl-Bereichsfeld liegt. Nach der Zählerrücksetzung (Schritt 12) wird dann zur Datenausgabe (Schritt 13) weitergegangen, wonach wiederum zum Verfahrensbeginn vor Schritt 2 zurückgegangen wird.

Das Zugbetrieb-Bewertungsverfahren gemäß Fig. 1 leistet folglich zum einen eine Bewertung des Fahrerverhaltens im Zugbetrieb, wobei die erste Bewertungsziffer (B1) ein Maß für das bisherige Fahrerverhalten im Zugbetrieb ist, und zum anderen zusätzlich eine aktuelle Fahrerinformation darüber, daß der Zugbetrieb bereits zu lange in einem unerwünscht niedrigen Gang erfolgt und sich die Fahrweise durch Einlegen eines höheren Gangs verbessern läßt.

Die Bewertung des Fahrerverhaltens im motorlastfreien Fahrbetrieb, d.h. im Schub- oder Bremsbetrieb, ist in den Fig. 4 bis 6 veranschaulicht.

Der zugehörige Verfahrensablauf ist in Fig. 4 dargestellt. Die ersten vier Schritte (14 bis 17) der Fahreridentifikation, der Eingangsparameterfestlegung, der Geschwindigkeitsabfrage sowie der Sensierung benötigter Größen entsprechen weitgehend denen von Fig. 1. Zur Sensierung des motorlastfreien Zustands, d.h. des Leerlaufbereichs, ist der Leergas-Schalter (58) am Fahrpedal vorgesehen. Alternativ kann die Leerlauferkennung durch einen Schalter im Gasgestänge oder an der Einspritzpumpe bzw. am Vergaser erfolgen, oder das zugehörige Signal wird von einer anderen Elektronik über geeignete Schnittstellen übernommen. Weiterhin wird vom Steuergerät das im Fahrzeug vorhandene Bremslichtsignal abgegriffen und erfaßt. Daran schließt sich eine Abfrage an, ob das Fahrpedal auf Null-Stellung ist (Schritt 18). Ist dies nicht der Fall, so wird dies als nicht motorlastfreier Zustand erkannt, woraufhin wieder an den Taktanfang vor Schritt 15 zurückgegangen wird. Liegt die Fahrpedalstellung null vor, wird als nächstes abgefragt, ob ein höherer als der niedrigste Gang eingelegt ist (Schritt 19). Ist der niedrigste Gang eingelegt, so findet keine Bewertung statt, da dies dann bereits einem günstigen Fahrzustand entspricht, und es wird an den Taktanfang vor Schritt 15 zurückgekehrt. Ist hingegen ein höherer als der niedrigste Gang eingelegt, so wird als nächstes abgefragt (Schritt 22), ob die Betriebsbremse betätigt ist, was durch das Signal vom Bremslichtschalter (60) erkannt wird. Ist dies der Fall, so findet anschließend ein Bewertungsschritt (Schritt 20) für die Bewertung des Schub-/Bremsbetriebs statt.

Die Vorgehensweise für diese Bewertung wird unter Bezugnahme auf die Fig. 5 und 6 näher erläutert. Als einziger Lastbereich liegt die Fahrpedalstellung Null, also der motorlastfreie Bereich vor. Die Motordrehzahl wird ähnlich wie bei der Zugbetriebbewertung wieder in eine Anzahl (Xs) von Drehzahlteilbereichen (i; i=1, ..., Xs) unterteilt, und zwar in mindestens zwei Teilbereiche. Wie im Fall des Zugbetriebs werden nun den durch die Drehzahlunterteilung entstehenden Bereichsfelder Gewichtungsfaktoren ($GFs_i$) zugeordnet, die ein Maß dafür sind, wie erwünscht das Fahren im Schub-/Bremsbetrieb in dem jeweiligen Drehzahlteilbereich (i) ist. In erwünschten Teilbereichen werden Gewichtungsfaktoren gleich oder größer als eins, in unerwünschten Bereichen kleiner als eins gewählt. Neben diesem so entstehenden Gewichtungsfaktorvektor ($GFs_1,...,GFs_i,...,GFs_{Xs}$) wird analog ein Anteilswertvektor ($Bs_1,...,Bs_i,...,Bs_{Xs}$) gemäß Fig. 6 gebildet, der Auskunft darüber gibt, wie häufig jeder Drehzahlteilbereich (i) im Schub-/Bremsbetrieb benutzt wurde. Hierzu wird im Bewertungsschritt (20) festgestellt, in welchem Drehzahlteilbereich (i) momentan gefahren wird. Dann wird der bisher erhaltene Anteilswert ($Bs_i$) dieses Drehzahlteilbereichs (i) als ein Zählwert um ein Inkrement ($dBs_i$), das beispielhaft auf den Wert eins gesetzt ist, erhöht. Schließlich ergibt sich die aktuell gültige zweite Bewertungsziffer (B2) für den Schub/Bremsbetrieb durch Skalarproduktbildung des Gewichtungsfaktorvektors mit dem Anteilswertvektor und Division des erhaltenen Skalarprodukts durch die Summe der Anteilswerte ($Bs_i$), d.h.

$$B2= (Bs_1 GFs_1+...+Bs_{Xs}GFs_{Xs})/(Bs_1+...+Bs_{Xs}).$$

Auf den Bewertungsschritt folgt eine Abfrage (Schritt 21) dahingehend, ob der Gewichtungsfaktor ($GFs_i$) für den aktuell vorliegenden Drehzahlteilbereich (i) im Schub-/Bremsbetrieb kleiner als eins ist, ob also momentan mit einer unerwünschten Motordrehzahl gefahren wird. Wenn dies der Fall ist, so wird ein anfangs auf null gesetzter Bremslichtzähler (Zs) inkremental um eins erhöht (Schritt 23) und anschließend abgefragt (Schritt 25), ob der neue Zählerwert (Zs) größer als ein vorgegebener Bremszähler-Grenzwert (Gs) ist. Bejahendenfalls wird dann ein Gangrückschalt-Anzeigesignal erzeugt (Schritt 27), das dem Fahrer signalisiert, daß bereits unvorteilhaft lange in einem unerwünscht hohen Gang gefahren wurde und ein Zurückschalten in einen niedrigeren Gang von Vorteil wäre. Das Signal wird dem Fahrer über die Meldelampe (52) oder alternativ über eine akustische oder optische Anzeige zur Kenntnis gebracht. Anschließend wird der betreffende Zähler (Zs) wieder auf null zurückgesetzt (Schritt 28) und zur Datenausgabe (Schritt 29) übergegangen, durch die je nach Anwendungsfall die einzelnen Gewichtungsfaktoren ($GFs_i$), die Zählwerte ($Bs_i$) der einzelnen Drehzahlteilbereiche (i) und/oder die zugehörige zweite Bewertungsziffer (B2) für den Schub-/Bremsbetrieb aus dem Steuergerät (50) ausgegeben werden. Die Übertragung der Daten an eine Zentrale erfolgt in derselben Weise wie oben zur Zugbetriebbewertung beschrieben. Wenn bei der betreffenden Abfrage im Schritt 25 der Zählwert (Zs) den vorgegebenen Grenzwert (Gs), der die tolerierte Dauer des Bremsbetriebs in einem ungünstigen Drehzahlbereich bestimmt, noch nicht überschritten hat, wird sofort zum Datenausgabeschritt (29) gesprungen. Nach der Datenausgabe kehrt der Verfahrensablauf wieder vor den Schritt 15 zur Durchführung eines neuen Verfahrenstaktes zurück. Die Auslösung eines neuen Taktes erfolgt wie im Fall des Zugbetriebs wählbar in konstanten Fahrzeit-, Fahrstrecken- oder Motordrehzahlabständen.

Wenn im Schritt 21 bei der Abfrage des Gewichtungsfaktors ($GFs_i$) für den aktuell vorliegenden Drehzahlteilbereich ein Wert kleiner als eins und damit das Vorliegen eines ungünstigen Drehzahlteilbereichs erkannt wird, erfolgt hingegen eine Dekrementierung des Bremszählerwertes (Zs) um den Wert eins (Schritt 24). Selbiges geschieht unter Umgehung des Bewertungs- und des Gewichtungsfaktorabfrageschrittes auch, wenn im Schritt (22) die Nichtaktivierung der Bremsanlage festgestellt wird. Nach dieser Zählerdekrementierung wird abgefragt (Schritt 26), ob der dekrementierte Zählwert (Zs) kleiner als null ist. Ist dies noch nicht der Fall, wird zum Datenausgabeschritt (29) gesprungen. Ist der Zählerwert (Zs) hingegen unter null abgesunken, wird zum Rücksetzschritt (28) gesprungen, in welchem der Zählwert (Zs) wieder auf den Ausgangswert null zurückgesetzt wird. Während vorliegend sowohl die Inkrementierung als auch die Dekrementierung des Bremszählers um den Wert eins erfolgen, kann alternativ vorgesehen sein, die Dekrementierung mit einem anderen Wert als die Inkrementierung vorzunehmen. Bei der Ermittlung der zweiten Bewertungsziffer (B2) wird im Gegensatz zur Zugbetriebbewertung der höchste Gang gleichbehandelt mit den anderen Gängen, während der niedrigste Gang nicht bewertet wird.

Die obigen, auf die Bewertung der Fahrweise im Schub-/Bremsbetrieb folgenden Schritte dienen der Vermeidung häufiger, kurzer Anpassungsbremsungen mit der verschleißenden Betriebsbremse. Das Ziel einer günstigen Fahrweise im Schub-/Bremsbetrieb ist es, eine vorausschauende Fahrweise zu erreichen, abruptes Bremsen zu vermeiden und möglichst die verschleißfreien Betriebsbremsen, wozu auch das Bremsverhalten des Motors im lastlosen Zustand gehört, unter Schonung der verschleißenden Betriebsbremsen einzusetzen. Der Fahrer wird aufgefordert, einen niedrigeren Gang zu verwenden, wenn bei aktivierter Betriebsbremse das Fahren in einem ungünstigen Drehzahlteilbereich für einen längeren Zeitraum, der durch die Wahl des Grenzwertes (Gs) bestimmt ist, erkannt wurde. Durch das dann vom Fahrer vorzunehmende Zurückschalten in einen niedrigeren Gang erhöht sich die Bremswirkung des Motors oder einer gegebenenfalls vorhandenen zusätzlichen verschleißfreien Bremse, so daß die verschleißende Betriebsbremse nicht oder nur in geringerem Maße benötigt wird. Durch die vergleichsweise langsame Dekrementierung statt einer direkten Zurücksetzung auf null wird erreicht, daß die Meldeschwelle, also die Auslösung des Gangrückschalt-Anzeigesignals, schneller erreicht wird, wenn sich nach einer kurzen Zeitdauer bereits wieder ein unerwünschter Betriebszustand einstellt, wie dies bei unerwünschten häufigen, kurzen Anpassungsbremsungen mit der verschleißenden Betriebsbremse der Fall wäre.

Die Ermittlung der dritten Bewertungsziffer (B3), die über das allgemeine Bremsverhalten des Fahrers Auskunft gibt, wird anhand der Fig. 7 bis 9 erläutert.

In Fig. 7 ist der Verfahrensablauf zur Bewertung des allgemeinen Bremsverhaltens dargestellt. Die ersten drei Schritte (30 bis 32), d.h. die Fahrerindentifikation, die Eingangsparameterfestsetzung und die Geschwindigkeitsabfrage, entsprechen den Schritten bei der Zugbetrieb- sowie Schub-/Bremsbetriebbewertung gemäß den Fig. 1 bzw. 4. Liegt ein Fahrbetrieb mit Geschwindigkeit größer als null vor, so wird zunächst anhand des Bremslichtschalterssignals abgefragt (Schritt 33), ob die Betriebsbremse betätigt ist. Ist dies nicht der Fall, wird zur Durchführung eines neuen Verfahrenstaktes vor den Schritt 31 zurückgekehrt. Ist hingegen die Bremsanlage aktiviert, so wird als nächstes die Fahrzeugverzögerung ermittelt (Schritt 34). Dies erfolgt durch aufeinanderfolgende Messungen der Fahrzeuggeschwindigkeit mittels Erfassung der Raddrehzahlen und Bestimmung der zeitlichen Veränderung der Geschwindigkeit. Sobald die Fahrzeugverzögerung bestimmt ist, findet als nächstes ein Bewertungsschritt (Schritt 35) statt, der nachfolgend anhand der Fig. 8 und 9 näher ausgeführt ist.

Die Fig. 8 und 9 zeigen eine Aufteilung der möglichen Fahrzeugverzögerungswerte in eine Anzahl (Ve) von Teilbereichen, wobei Ve größer als eins ist. Jedem Verzögerungsteilbereich (i) wird gemäß Fig. 8 ein Verzögerungs-Gewichtungsfaktor ($GFv_i$) zugeordnet, wobei Teilbereiche mit erwünschten Verzögerungswerten mit Gewichtungsfaktorwerten größer oder gleich eins und Teilbereiche mit weniger oder nicht erwünschten Verzögerungswerten mit Gewichtungsfaktorwerten kleiner als 1 belegt werden. Es wird davon ausgegangen, daß unabhängig von Fahrzeuggewicht und den übrigen Randbedingungen eine mäßige Fahrzeugverzögerung angestrebt wird, wozu je nach den herrschenden Bedingungen unterschiedliche Bremskräfte erforderlich sind, so daß letztere keine geeignete Basis zur Bremsbeurteilung darstellen. Weiterhin soll der Fahrer durch vorausschauende Fahrweise kritische Fahrzustände mit erforderlichen Notbremsungen so weit wie möglich vermeiden.

Auf diese Weise entsteht ein Verzögerungs-Gewichtungsfaktorvektor ($GFv_1$, ..., $GFv_{Ve}$), wie er in Fig. 8 veranschaulicht ist, der als Basis für die Bewertung des allgemeinen Bremsverhaltens dient. Jedem Verzögerungsteilbereich (i) ist zudem gemäß Fig. 9 ein Verzögerungs-Anteilswert ($Bv_i$) zugeordnet, der darüber Auskunft gibt, wie häufig ein Bremsvorgang in dem betreffenden Verzögerungsteilbereich (i) erfolgt. Im Bewertungsschritt (35) wird zu diesem Zweck zunächst festgestellt, in welchem Verzögerungsteilbereich (i) der aktuell ermittelte Verzögerungswert liegt. Dann wird der zu diesem Teilbereich (i) gehörige Verzögerungs-Anteilswert ($Bv_i$) als ein Zählwert um ein Inkrement ($dBv_i$) erhöht, das beispielhaft den Wert eins besitzt, jedoch alternativ auch einen anderen Wert annehmen kann. Auf diese Weise entsteht während des Fahrbetriebs der in Fig. 9 illustrierte Verzögerungs-Anteilswertvektor ($Bv_1$,...,$Bv_{Ve}$), der

darüber Auskunft gibt, wie häufig betreffende Verzögerungswerte während Bremsvorgängen angenommen wurden. Zur Bewertung des allgemeinen Bremsverhaltens eines Fahrers wird dann die dritte Bewertungsziffer (B3) als Skalarprodukt des Verzögerungs-Gewichtungsfaktorvektors mit dem Verzögerungs-Zählwertvektor dividiert durch die Summe der Verzögerungs-Anteilswerte gebildet, d.h.

$$B3=(Bv_1GFv_1+...+Bv_{Ve}GFv_{Ve})//B_{v1}+...+Bv_{Ve}).$$

Je höher die erzielte dritte Bewertungsziffer (B3), um so besser entspricht das tatsächliche Bremsverhalten dem angestrebten allgemeinen Bremsverhalten. Selbstverständlich ist wiederum alternativ ein inverses Bewertungsverfahren möglich, bei dem erwünschte Verzögerungsteilbereiche mit kleineren und nicht angestrebte Verzögerungsteilbereiche mit größeren Gewichtungsfaktorwerten versehen werden, wobei dann das Bremsverhalten um so besser ist, je kleiner die dritte Bewertungsziffer ausfällt.

Nach einer jeweils aktualisierten Bewertung (Schritt 35) findet dann wiederum eine Datenausgabe (Schritt 36) statt, innerhalb der je nach Bedarf die Verzögerungs-Gewichtungsfaktoren ($GFv_i$), die Verzögerungs-Zählwerte ($Bv_i$) und/oder die dritte Bewertungsziffer (B3) aus dem Steuergerät (50) zur Weiterverarbeitung und/oder Abspeicherung ausgegeben werden. Damit ist ein Taktdurchlauf zur Bewertung des allgemeinen Bremsverhaltens beendet und es wird vor den Schritt 31 zur neuerlichen Durchführung eines nächsten Taktes zurückgekehrt.

Es versteht sich, daß das Steuergerät (50) die drei Verfahrensabläufe zur Ermittlung der ersten, zweiten und dritten Bewertungsziffer (B1, B2, B3) parallel unabhängig voneinander auszuführen vermag. Außerdem ist das Steuergerät so eingerichtet, daß eine Bewertung für unterschiedliche, das Fahrzeug benutzende Fahrer möglich ist. Den zugehörigen Verfahrensablauf zeigt Fig. 10 schematisch. Zu Beginn der Bewertung wird zunächst die Fahreridentifikation (Schritt 37) durchgeführt, wie sie bereits zu den Fig. 1, 4 und 7 erwähnt wurde. Diese Identifikation erfolgt, wie gesagt, mittels eines vom Fahrer zu bedienenden Schalters oder alternativ mittels einer vom Fahrer einzustekkenden, fahrerspezifischen Chipkarte, die vom Steuergerät (50) lesbar ist, oder, wenn das Fahrzeug über einen Tachographen verfügt, vorzugsweise durch Auswertung des Tachographensignals durch das Steuergerät (50), das zu diesem Zweck mit dem Tachographen über die Signalleitung (61) verbunden ist. Es folgt dann die momentane Fahrweisenbewertung (Schritt 38), wie sie oben im einzelnen beschrieben wurde. Danach stellt das Steuergerät fest (Schritt 39), ob bereits Daten der aktuellen Fahrerspezifikation vorhanden sind. Wenn nicht, wird die Fahrerbewertung spezifiziert (Schritt 40), d.h. die Eingangsparameter gegebenenfalls spezifisch auf den jeweiligen Fahrer abgestimmt vorgewählt und die Ausgangswerte gesetzt, die z.B. anfänglich auf null oder aber auf Werte festgelegt sind, die von einer vorhergehenden Fahrt dieses Fahrers resultieren. Daraufhin werden die von der aktuellen Fahrweisenbewertung erhaltenen Werte für die Motorlast-Drehzahl-Zählwerte ($Bz_{ij}$), die Schub-/Bremsbetrieb-Zählwerte ($Bs_i$) und die Verzögerungs-Zählwerte ($Bv_i$) in der oben beschriebenen Weise kumuliert (Schritt 41). Zu diesem Schritt wird im übrigen direkt übergegangen, wenn im vorigen Abfrageschritt (39) festgestellt wurde, daß die entsprechende Fahrerspezifikation bereits vorhanden ist. Das Verfahren setzt daraufhin wieder mit der Datenausgabe fort, wie sie bereits oben verschiedentlich erwähnt wurde, wobei nachfolgend unter Bezugnahme auf Fig. 11 die bei der Datenausgabe vorgesehenen Anzeigemöglichkeiten erläutert werden.

Hierzu fragt das Steuergerät (50) zunächst ab, ob eine Anzeigeaufforderung, z.B. vom Fahrer oder einer die Fahrweisenbewertung ausführenden Person, ergangen ist (Schritt 42). Ist dies nicht der Fall, erfolgt keine Anzeige und das System geht zu nachfolgenden Bearbeitungsschritten über. Wenn eine Anzeigeanforderung vorliegt, fragt das Steuergerät (50) als nächstes ab, ob die Anzeige einer Gesamtbewertung gewünscht wird (Schritt 43), und daraufhin, ob eine Einzelbewertung angezeigt werden soll (Schritte 44 bzw. 47). Je nach den beiden Antworten auf diese beiden Abfragen erfolgt dann entweder keine Anzeige (Schritt 45), lediglich eine Einzelbewertungsanzeige (Schritt 46), lediglich eine Gesamtbewertungsanzeige (Schritt 49) oder die Anzeige sowohl der Gesamt- als auch der Einzelbewertungen (Schritt 48). Hierbei werden zur Einzelbewertung die drei Bewertungsziffern (B1, B2, B3) einzeln angezeigt. Bei der Gesamtbewertung wird hingegen eine Gesamtbewertungsziffer als Mittelwert der drei Bewertungsziffern (B1, B2, B3) errechnet, wobei zur Ermittlung dieses Mittelwertes die einzelnen Bewertungsziffern in einer vorgebbaren Weise gewichtet werden, um beispielsweise alle drei Einzelbewertungen gleich zu gewichten oder das Fahren im Zugbetrieb oder aber das allgemeine Bremsverhalten stärker in die Gesamtbewertung einfließen zu lassen, je nachdem, welche Bewertungskomponente im jeweiligen Anwendungsfall besonders bedeutsam erscheint. Nach erfolgter Datenausgabe und -anzeige erfolgt mittels geeigneter Einrichtungen eine Rücksetzung der Parameter auf die Ausgangswerte zur Durchführung einer neuerlichen Bewertung.

Ersichtlich bietet die oben beschriebene, einfach aufgebaute Vorrichtung in Verbindung mit dem erläuterten Bewertungsverfahren die Möglichkeit einer objektiven und genauen Fahrweisenbewertung für verschiedene, ein Fahrzeug nutzende Fahrer.

## Patentansprüche

1. Verfahren zur Bewertung der Fahrweise mit einem Kraftfahrzeug, insbesondere einem Nutzfahrzeug, bei dem abgeleitet aus fahrzeugspezifischen Meßgrößen Bewertungsziffern bezüglich der Einhaltung einer vorgebbaren Fahrweise gebildet werden,
**dadurch gekennzeichnet, daß**

   - eine erste Bewertungsziffer (B1) über den Zugbetrieb des Kraftfahrzeugs unter Zuordnung entsprechender Betriebsphasen zu gewichteten Motordrehzahl-Motorlast-Kennfeldmatrixbereichen,
   - eine zweite Bewertungsziffer (B2) über den Schub-/Bremsbetrieb des Kraftfahrzeugs unter Zuordnung entsprechender Betriebsphasen zu gewichteten Motordrehzahlteilbereichen und
   - eine dritte Bewertungsziffer (B3) über den Verzögerungsbetrieb des Kraftfahrzeugs unter Zuordnung entsprechender Betriebsphasen zu gewichteten Verzögerungswerteteilbereichen gebildet werden.

2. Verfahren nach Anspruch 1, weiter
**dadurch gekennzeichnet, daß**
zur Ermittlung der ersten Bewertungsziffer (B1) über den Zugbetrieb folgende Schritte durchgeführt werden:

   - das Drehzahl-Motorlast-Kennfeld wird in eine Kennfeldmatrix mit mindestens zwei Last- und zwei Drehzahlbereichen aufgeteilt;
   - jedem Kennfeldmatrixbereich (i, j) wird ein Gewichtungsfaktor ($GFz_{ij}$) zugeordnet, der den Grad der angestrebten Benutzung des zugehörigen Drehzahl-Last-Bereiches repräsentiert;
   - im Fahrbetrieb wird detektiert, ob Zugbetrieb vorliegt, und für jedes Matrixfeld (i, j) wird innerhalb von Zugbetriebsphasen ein Zugbetriebsanteilswert ($Bz_{ij}$), insbesondere entweder ein fahrzeitanteiliger Wert, ein fahrstreckenanteiliger Wert oder ein motorumdrehungsanteiliger Wert, ermittelt und die erste Bewertungsziffer (B1) durch Multiplikation jedes Zugbetriebsanteilswertes mit dem zugehörigen Gewichtungsfaktor, Addition aller daraus resultierenden Produkte und Division der so erhaltenen Summe durch die Summe aller Zugbetriebsanteilswerte gebildet.

3. Verfahren nach Anspruch 2, weiter
**dadurch gekennzeichnet,**
daß in Zugbetriebsphasen, in denen der höchste Gang des Schaltgetriebes des Fahrzeugs eingelegt ist, keine Bestimmung der ersten Bewertungsziffer stattfindet.

4. Verfahren nach Anspruch 2 oder 3, weiter
**dadurch gekennzeichnet, daß**

   - durch Zuordnung entsprechender Gewichtungsfaktoren oberhalb oder unterhalb eines Schwellwertes die Kennfeldmatrixbereiche in anzustrebende und nicht anzustrebende Belastungszustände unterschieden werden,
   - die ununterbrochene Verweildauer in nicht angestrebten Zugbetriebszuständen erfaßt und
   - ein Ganghochschalt-Anzeigesignal generiert wird, wenn die erfaßte Verweildauer in nicht angestrebten Zugbetriebszuständen eine vorgebbare Maximaldauer überschreitet.

5. Verfahren nach einem der Ansprüche 1 bis 4, weiter
**dadurch gekennzeichnet, daß**
zur Ermittlung der zweiten Bewertungsziffer (B2) über den motorlastfreien Kraftfahrzeugbetrieb folgende Schritte durchgeführt werden:

   - der Motordrehzahlbereich wird in mehrere Teilbereiche unterteilt;
   - jedem Drehzahlteilbereich (i) wird ein Gewichtungsfaktor ($GFs_i$) zugeordnet, der den Grad der angestrebten Benutzung von in diesem Teilbereich liegenden Drehzahlwerten repräsentiert;
   - im Fahrbetrieb wird detektiert, ob lastfreier Motorbetrieb vorliegt und die Betriebsbremse aktiviert ist, und für solche Schub-/Bremsphasen für jeden Drehzahlteilbereich ein Schub-/Bremsbetriebsanteilswert ($Bs_i$) bestimmt sowie die zweite Bewertungsziffer (B2) durch Multiplikation jedes Schub-/Bremsbetriebsanteilswertes ($Bs_i$) mit dem zugehörigen Gewichtungs($GFs_i$), Addition aller daraus resultierenden Produkte und Division der so erhaltenen Summe durch die Summe aller Schub-/Bremsbetriebsanteilswerte gebildet.

6. Verfahren nach Anspruch 5, weiter
**dadurch gekennzeichnet, daß**

- durch Zuordnung entsprechender, unterhalb oder oberhalb eines vorgebbaren Schwellwertes liegender Schub-/Bremsbetriebgewichtungsfaktoren die Motordrehzahlteilbereiche in angestrebte und nicht angestrebte Teilbereiche unterschieden werden,
- die Aktivierung der Betriebsbremse detektiert wird,
- bei detektiertem lastfreiem Motorbetrieb und aktivierter Betriebsbremse die Verweildauer des Fahrzustandes in nichtangestrebten Drehzahlteilbereichen erfaßt und
- ein Gangrückschalt-Anzeigesignal generiert wird, wenn die erfaßte Verweildauer in nicht angestrebten Drehzahlteilbereichen eine vorgebbare Maximaldauer überschreitet.

7. Verfahren nach Anspruch 6, weiter
**dadurch gekennzeichnet, daß**

- zur Bestimmung der Verweildauer in nicht angestrebten Motordrehzahlbereichen im Schub-/Bremsbetrieb ein Zählwert (Zs) getaktet von einem Minimalwert an inkrementiert wird, solange nicht angestrebte Drehzahlteilbereiche vorliegen, und bis zu diesem Minimalwert dekrementiert wird, solange angestrebte Drehzahlteilbereiche vorliegen, und
- das Gangrückschalt-Anzeigesignal generiert wird, wenn der Zählwert (Zs) einen vorgebbaren Grenzwert (Gs) überschreitet, und der Zähler anschließend auf den Minimalwert zurückgesetzt wird.

8. Verfahren nach einem der Ansprüche 1 bis 7, weiter
**dadurch gekennzeichnet,**
daß zur Ermittlung der dritten Bewertungsziffer (B3) über den Fahrzeugverzögerungsbetrieb folgende Schritte durchgeführt werden:

- der Verzögerungswertebereich wird in mehrere Teilbereiche unterteilt;
- jedem Teilbereich (i) wird ein Gewichtungsfaktor ($GFv_i$) zugeordnet, der den Grad der angestrebten Benutzung von in diesem Bereich liegenden Verzögerungswerten repräsentiert;
- im Fahrbetrieb wird detektiert, ob die Betriebsbremse aktiviert ist, und für jeden Verzögerungswerteteilbereich ein Verzögerungsbetriebsanteilswert ($Bv_i$) bestimmt sowie die dritte Bewertungsziffer (B3) durch Multiplikation jedes Verzögerungsbetriebsanteilswertes ($Bv_i$) mit dem zugehörigen Gewichtungsfaktor ($GFv_i$), Addition aller daraus resultierenden Produkte und Division der so erhaltenen Summe durch die Summe aller Verzögerungsbetriebsanteilswerte gebildet.

9. Verfahren nach einem der Ansprüche 1 bis 8, weiter
**dadurch gekennzeichnet, daß**
die Eingangsparameter zur Fahrweisenbewertung, insbesondere die Gewichtungsfaktoren, die vorgebbaren Grenzwerte sowie die Zählerinkremente und -dekremente, benutzerseitig vorgebbar sind.

10. Verfahren nach einem der Ansprüche 4 bis 9, weiter
**dadurch gekennzeichnet, daß**
das Anzeigen des Ganghochschalt- und/oder des Gangrückschalt-Anzeigesignals fahrerseitig aktivierbar und deaktivierbar ist.

11. Verfahren nach einem der Ansprüche 1 bis 10, weiter
**dadurch gekennzeichnet, daß**
eine Gesamtbewertungsziffer durch Bildung eines Mittelwertes aus den drei in vorgebbarer Weise gewichteten Bewertungsziffern ermittelt wird.

12. Verfahren nach einem der Ansprüche 1 bis 11, weiter
**dadurch gekennzeichnet, daß**
die aktuellen Werte der einzelnen Bewertungsziffern und/oder der Gesamtbewertungsziffer selbsttätig angezeigt werden.

13. Verfahren nach einem der Ansprüche 1 bis 11, weiter
**dadurch gekennzeichnet, daß**

die aktuellen Werte der einzelnen Bewertungsziffern und/oder der Gesamtbewertungsziffer auf Benutzeranforderung hin angezeigt werden.

**14.** Vorrichtung zur Bewertung der Fahrweise mit einem Kraftfahrzeug, mit

- Mitteln (61) zur Fahreridentifikation und
- einem Steuergerät (50),

**dadurch gekennzeichnet, daß**

- das Steuergerät (50) zur spezifischen Durchführung des Verfahrens nach einem der Ansprüche 1 bis 13 für den jeweils identifizierten Fahrer eingerichtet ist und ausgebildet ist,
  - eine erste Bewertungsziffer (B1) über den Zugbetrieb des Kraftfahrzeugs unter Zuordnung entsprechender Betriebsphasen zu gewichteten Motordrehzahl-Motorlast-Kennfeldmatrixbereichen,
  - eine zweite Bewertungsziffer (B2) über den Schub-/Bremsbetrieb des Kraftfahrzeugs unter Zuordnung entsprechender Betriebsphasen zu gewichteten Motorerehzahlteilbereichen und
  - eine dritte Bewertungsziffer (B3) über den Verzögerungsbetrieb des Kraftfahrzeugs unter Zuordnung entsprechender Betriebsphasen zu gewichteten Verzögerungswerteteilbereichen zu bilden.

**15.** Vorrichtung nach Anspruch 14, weiter
**dadurch gekennzeichnet, daß**
die Mittel zur Fahreridentifikation eine vom Fahrer bedienbare Schalteinrichtung beinhalten.

**16.** Vorrichtung nach Anspruch 14 für ein Fahrzeug mit einem Tachographen, weiter
**dadurch gekennzeichnet, daß**
die Mittel zur Fahreridentifikation den Tachographen und eine Signalleitung (61) vom Tachographen zum Steuergerät (50) beinhalten.

**17.** Vorrichtung nach Anspruch 14, weiter
**dadurch gekennzeichnet, daß**
die Mittel zur Fahreridentifizierung einen elektronischen Datenträger, insbesondere eine Chipkarte, beinhalten.

**18.** Vorrichtung nach einem der Ansprüche 14 bis 17, weiter
**dadurch gekennzeichnet, daß**
das Steuergerät (50) einen Rechner zur Ermittlung der einzelnen Bewertungsziffern und der Gesamtbewertungsziffer beinhaltet, der eine Ausgangsschnittstelle zur Datenausgabe an einen elektronischen Datenträger und/oder eine Ausgangsschnittstelle zur Datenausgabe an ein drahtloses Kommunikationssystem aufweist.

**19.** Vorrichtung nach einem der Ansprüche 14 bis 18, weiter
**dadurch gekennzeichnet, daß**
das Steuergerät (50) eine Speichereinrichtung zur Datenspeicherung sowie Mittel zum Rücksetzen der Speichereinrichtung beinhaltet.

## Claims

**1.** A process for the assessment of driving behaviour with a motor vehicle, in particular a utility vehicle, in which assessment values relating to adherence to a pre-programmable pattern of driving behaviour can be calculated derived from vehicle-specific measured quantities,
**characterised in that**

- a first assessment value (B1) is calculated for the traction of the motor vehicle with the allocation of appropriate operating phases to weighted engine speed/engine load characteristic map matrix sectors,
- a second assessment value (B2) is calculated for the thrust/braking action of the motor vehicle with the allocation of appropriate operating phases to weighted engine speed sub-sectors and
- a third assessment value (B3) is calculated for the retarding action of the motor vehicle with the allocation of appropriate operating phases to weighted retardation value sub-sectors.

**2.** A process in accordance with Claim 1, further
**characterised in that**
in order to determine the first assessment value (B1) for traction the follow steps are taken:

- the engine speed/engine load characteristic map is divided into a characteristic map matrix with at least two load and two speed sectors;
- a weighting factor ($GFz_{ij}$) representing the extent of the targeted use of the respective speed/load sectors is allocated to each characteristic map matrix sector (i, j);
- under road load the absence or presence of traction is detected and during traction phases a proportional traction value ($Bz_{ij}$), in particular either a value proportionate to drive time, a value proportionate to distance covered or a value proportionate to engine speed, is determined for each matrix map (i, j) and the first assessment value (B1) is calculated by multiplying each proportional traction value by the relevant weighting factor, adding together all the resulting products and dividing the sum thus obtained by the sum of all the proportional traction values.

**3.** A process in accordance with Claim 2, further
**characterised in that**
in traction phases in which the highest gear of the vehicle's manual transmission is engaged no determination of the first assessment value takes place.

**4.** A process in accordance with Claim 2 or 3, further
**characterised in that**

- the characteristic map matrix sectors are differentiated into targeted and non-targeted load conditions by the allocation of appropriate weighting factors above or below a threshold value,
- the uninterrupted time elapsed in non-targeted load conditions is measured and
- a gear change-up indicator signal is generated if the measured time elapsed in non-targeted traction conditions exceeds a pre-programmable maximum time.

**5.** A process in accordance with one of Claims 1 to 4, further
**characterised in that**
in order to determine the second assessment value (B2) for no-load motor vehicle operation the following steps are taken:

- the engine speed sector is divided into several sub-sectors;
- a weighting factor ($GFs_i$) representing the extent of the targeted use of speed values in this sub-sector is allocated to each speed sub-sector (i);
- under road load the absence or presence of no-load operation and activation of the service brakes is detected and in thrust/braking phases a proportional thrust/braking value ($Bs_i$) is determined for each speed sub-sector and the second assessment value is calculated by multiplying each proportional thrust/braking value ($Bs_i$) by the relevant weighting factor ($GFs_i$), adding together all the resulting products and dividing the sum thus obtained by the sum of all proportional thrust/braking values.

**6.** A process in accordance with Claim 5, further
**characterised in that**

- by allocating appropriate thrust/brake weighting factors which lie above or below a pre-programmable threshold value, the engine speed sub-sectors can be differentiated according to targeted and non-targeted load conditions,
- the activation of the services brakes can be detected,
- when no-load engine operation and activated service brake operation is detected, the driving time elapsed in non-targeted speed sub-sectors is measured and
- a gear change-down indicator signal is generated when the measured time elapsed in the non-targeted speed sub-sectors exceeds a pre-programmable maximum time.

**7.** A process in accordance with Claim 6, further
**characterised in that**

- in order to determine the time elapsed in non-targeted engine speed regions in thrust/braking operation a counter value (Zs) timed from a minimum value is incremented in non-targeted speed sub-sectors and decremented to this minimum value in targeted speed sub-sectors, and
- the gear down-change indicator signal is generated when the counter value (Zs) exceeds a pre-programmable limit value (Gs) and the counter is then reset to the minimum value.

**8.** A process in accordance with one of Claims 1 to 7, further
**characterised in that**
in order to determine the third assessment value (B3) for vehicle retardation the following steps are taken:

- the retardation value sector is divided into several sub-sectors;
- a weighting factor ($GFv_i$) representing the extent of the targeted use of retardation values in this sub-sector is allocated to each retardation sub-sector;
- under road load the absence or presence of service brake activation is detected and a proportional retardation value ($Bv_i$) is determined for each retardation value sub-sector and the third assessment value is calculated by multiplying each proportional retardation value ($Bv_i$) by the relevant weighting factor ($GFv_i$), adding together all the resulting products and dividing the sum thus obtained by the sum of all the proportional retardation values.

**9.** A process in accordance with one of Claims 1 to 8, further
**characterised in that**
the input parameters for the assessment of driving behaviour, in particular the weighting factors, the pre-programmable limit values and the counter increments and decrements, can be programmed by the user.

**10.** A process in accordance with one of Claims 4 to 9, further
**characterised in that**
the indication of the gear change-up and/or gear change-down indicator signal can be activated and de-activated by the driver.

**11.** A process in accordance with one of Claims 1 to 10, further
**characterised in that**
an overall assessment value is determined by calculating the average of the three pre-programmable weighted assessment values.

**12.** A process in accordance with one of Claims 1 to 11, further
**characterised in that**
the current values for the individual assessment values and/or the overall assessment value are indicated automatically.

**13.** A process in accordance with one of Claims 1 to 11, further
**characterised in that**
the current values for the individual assessment values and/or the overall assessment value are indicated at the instruction of the driver.

**14.** A device to assess driving behaviour with a motor vehicle, with

- a means (61) of driver identification and
- a control device (50),

**characterised in that**

- the control device (50) is fitted and designed specifically to carry out the process described in Claims 1 to 13 for the identified driver in question,
- a first assessment value (B1) is calculated for the traction of the motor vehicle with the allocation of appropriate operating phases to weighted engine speed/engine load characteristic map matrix sectors,
- a second assessment value (B2) is calculated for the thrust/braking action of the motor vehicle with the allocation of appropriate operating phases to weighted engine speed sub-sectors and
- a third assessment value (B3) is calculated for the retarding action of the motor vehicle with the allocation of appropriate operating phases to weighted retardation value sub-sectors.

**15.** A device in accordance with Claim 14, further
**characterised in that**
the means of driver identification contains a switching device which can be operated by the driver.

**16.** A device in accordance with Claim 14 for a vehicle with a tachograph, further
**characterised in that**
the means of driver identification contains the tachograph and a signal line (61) from the tachograph to the control unit (50).

**17.** A device in accordance with Claim 14, further
**characterised in that**
the means of driver identification contains an electronic data carrier, in particular a chip card.

**18.** A device in accordance with one of Claims 14 to 17, further
**characterised in that**
the control device (50) contains a computer to determine the individual assessment values and the overall assessment value which features an output interface to output data to an electronic data carrier and/or an output interface to output data to a radio communication system.

**19.** A device in accordance with one of Claims 14 to 18, further
**characterised in that**
the control unit (50) contains a memory device for data storage and a means to reset the memory device.

**Revendications**

**1.** Procédé pour évaluer la manière de conduire avec un véhicule automobile, en particulier avec un véhicule utilitaire, dans lequel , sur la base de grandeurs de mesure spécifiques au véhicule, on forme des chiffres d'évaluation indicatifs du respect d'une manière de conduire qui peut être prédéterminée,
caractérisé en ce qu'on forme

- un premier chiffre d'évaluation (B1) relatif au mode traction du véhicule automobile avec association de phases de mode correspondantes pour obtenir des régions pondérées de matrice de diagrammes caractéristiques nombre de tours du moteur-charge du moteur
- un deuxième chiffre d'évaluation (B2) relatif au mode poussée/freinage du véhicule automobile avec association de phases correspondantes du mode pour obtenir des régions partielles pondérées de nombres de tours du moteur et
- un troisième chiffre d'évaluation (B3) relatif au mode décélération du véhicule automobile avec association de phases correspondantes du mode pour obtenir des régions partielles de valeurs de décélération.

**2.** Procédé selon la revendication 1,
caractérisé en outre en ce que,
pour obtenir le premier chiffre d'évaluation (B1), relatif au mode traction, on exécute les phases suivantes :

- on subdivise le diagramme caractéristique nombre de tours-charge du moteur en une matrice de diagrammes caractéristiques possédant au moins deux régions de charge et deux régions de nombres de tours ;
- à chaque région de la matrice de diagrammes caractéristiques (i, j), on associe un facteur de pondération ($GFz_{ij}$), qui représente le degré d'utilisation recherché de la région nombre de tours-charge correspondante ;
- dans le mode marche, on détecte aussi si l'on est en présence d'un mode traction et, pour chaque champ de matrice (i, j), on trouve à l'intérieur de phases du mode traction une quote-part de mode traction ($Bz_{ij}$), en particulier, soit une quote-part de temps de conduite, soit une quote-part de distance parcourue, soit une quote-part de nombre de tours du moteur, et on forme le premier chiffre d'évaluation (B1) par multiplication de chaque quote-part du mode traction par un facteur de pondération correspondant, addition de tous les produits en résultant, et division de la somme ainsi obtenue par la somme de toutes les quotes-parts du mode traction.

**3.** Procédé selon la revendication 2,
caractérisé en outre en ce que,
dans les phases du mode traction dans lesquelles le plus haut rapport de la boîte de vitesses du véhicule est enclenché, il ne se produit aucune détermination du premier chiffre d'évaluation.

**4.** Procédé selon la revendication 2 ou 3,
caractérisé en outre en ce que

- par association de facteurs de pondération correspondants au-dessus ou au-dessous d'une valeur de seuil, on classe les régions des matrices de diagrammes caractéristiques en états de charge recherchés et non recherchés,
- on saisit la durée de persistance ininterrompue dans les états de mode traction non recherchés, et
- on engendre un signal d'affichage de montée des rapports lorsque la durée de persistance saisie dans des états de mode traction non recherchés excède une durée maximale pouvant être prédéterminée.

**5.** Procédé selon une des revendications 1 à 4,
caractérisé en outre en ce que ,
pour obtenir le deuxième chiffre d'évaluation (B2), on exécute les phases suivantes relatives au mode sans charge du moteur du véhicule automobile :

- on subdivise la région de nombres de tours du moteur en plusieurs régions partielles :
- à chaque région partielle de nombres de tours du moteur (i), on associe un facteur de pondération ($GFs_i$) qui représente le degré d'utilisation recherché de valeurs de nombres de tours contenues dans cette région partielle ;
- dans le mode marche, on détecte si l'on est en présence d'un mode au moteur sans charge et si le frein de service est activé et, pour les phases de poussée/freinage pour chaque région partielle de nombres de tours, on détermine une quote-part du mode poussée/freinage ($Bs_i$) et on forme le deuxième chiffre d'évaluation (B2) par multiplication de chaque quote-part de mode poussée/freinage ($Bs_i$) par le facteur de pondération correspondant ($GFs_i$), addition de tous les produits en résultant et division de la somme ainsi obtenue par la somme de toutes les quotes-parts du mode poussée/freinage.

**6.** Procédé selon la revendication 5,
caractérisé en outre en ce que

- par association de facteurs de pondération du mode poussée/freinage correspondants, situés au-dessous ou au-dessus d'une valeur de seuil pouvant être prédéterminée, on classe les régions partielles de nombres de tours du moteur en régions partielles recherchées et régions partielles non recherchées,
- on détecte l'activation du frein de service,
- en cas de détection de mode moteur sans charge et de frein de mode activé, on saisit la durée de persistance de l'état de marche dans les régions partielles de nombres de tours du moteur non recherchées et

on engendre un signal d'affichage de rétrogradage des rapports lorsque la durée de persistance saisie dans les régions partielles de nombres de tours non recherchées excède une durée maximale pouvant être prédéterminée.

**7.** Procédé selon la revendication 6,
caractérisé en outre en ce que

- pour la détermination de la durée de persistance dans les régions de nombres de tours du moteur non recherchées dans le mode poussée/freinage, on incrémente une valeur de comptage (Zs) à partir d'une valeur minimale aussi longtemps qu'on est en présence de régions partielles de nombres de tours non recherchées et on la décrémente jusqu'à cette valeur minimale aussi longtemps qu'on est en présence de régions partielles de nombres de tours recherchées et
- on engendre le signal d'affichage de rétrogradage des rapports lorsque la valeur de comptage (Zs) excède une valeur limite (Gs) pouvant être prédéterminée, et le compteur est ensuite ramené à la valeur minimale.

**8.** Procédé selon une des revendications 1 à 7,
caractérisé

en ce que pour la détermination du troisième chiffre d'évaluation (B3), relatif au mode décélération du véhicule, on effectue les phases suivantes :

- on subdivise la région de valeurs de décélération en plusieurs régions partielles ;
- à chaque région partielle (i), on associe un facteur de pondération ($GFv_i$) qui représente le degré d'utilisation recherché de valeurs de décélération qui se trouvent dans cette région ;
- dans le mode marche, on détecte si le frein de service est activé et, pour chaque région partielle de valeurs de décélération, on détermine une quote-part de mode décélération ($Bv_i$) et on forme le troisième chiffre d'évaluation (B3) par multiplication de chaque quote-part du mode décélération ($Bv_i$) par le facteur de pondération correspondant ($GFv_i$), addition de tous les produits en résultant et division de la somme obtenue par la somme de toutes les valeurs partielles du mode décélération.

**9.** Procédé selon une des revendications 1 à 8,
caractérisé en outre en ce que
les paramètres d'entrée pour l'évaluation de la manière de conduire, en particulier les facteurs de pondération, les valeurs limites pouvant être prédéterminées ainsi que les incréments et décréments du compteur peuvent être prédéterminées par l'utilisateur.

**10.** Procédé selon une des revendication 4 à 9,
caractérisé en outre en ce que
l'affichage du signal de montée des rapports et/ou de rétrogradage des rapports peut être activé et désactivé par le conducteur.

**11.** Procédé selon une des revendications 1 à 10,
caractérisé en ce qu'
on obtient un chiffre d'évaluation globale par formation d'une valeur moyenne des trois chiffres d'évaluation pondérés d'une façon pouvant être prédéterminée.

**12.** Procédé selon une des revendications 1 à 11,
caractérisé en outre en ce que
les valeurs actuelles des chiffres d'évaluation élémentaires et/ou du chiffre d'évaluation globale sont affichées automatiquement.

**13.** Procédé selon une des revendications 1 à 11,
caractérisé en outre en ce que
les valeurs actuelles des chiffres d'évaluation élémentaires et/ou du chiffre d'évaluation globale sont affichées sur demande de l'utilisateur.

**14.** Dispositif pour l'évaluation du mode de conduite avec un véhicule automobile comprenant

- des moyens (61) pour l'identification du conducteur et
- un appareil de commande (50)

caractérisé en ce que

- l'appareil de commande (50) est orienté et constitué pour l'exécution spécifique du procédé selon une des revendications 1 à 3 pour le conducteur identifié,

pour former

- un premier chiffre d'évaluation (B1) relatif au mode traction du véhicule automobile avec association de phases de mode correspondantes pour obtenir des régions pondérées de matrices de diagrammes caractéristiques nombre de tours du moteur-charge du moteur
- un deuxième chiffre d'évaluation (B2) relatif au mode poussée/freinage du véhicule automobile avec association de phases correspondantes du mode pour obtenir des régions partielles pondérées de nombres de tours du moteur et
- un troisième chiffre d'évaluation (B3) relatif au mode décélération du véhicule automobile avec association de phases correspondantes du mode pour obtenir des régions partielles de valeur de décélération.

**15.** Dispositif selon la revendication 14,
caractérisé en outre en ce que
les moyens pour l'identification du conducteur comprennent un dispositif de commande pouvant être manipulé par le conducteur.

**16.** Dispositif selon la revendication 14,pour un véhicule muni d'un tachygraphe
caractérisé en ce que
les moyens pour l'identification du conducteur comprennent le tachygraphe et une ligne de signaux (61) conduisant du tachygraphe à l'appareil de commande (50)

**17.** Dispositif selon la revendication 14,
caractérisé en outre en ce que
les moyens pour l'identification du conducteur comprennent un support de données électronique, en particulier une carte à puce.

**18.** Dispositif selon une des revendications 14 à 17,
caractérisé en outre en ce que
l'appareil de commande (50) renferme un calculateur pour la détermination des chiffres d'évaluation élémentaires et du chiffre d'évaluation globale, qui présente une interface de sortie pour la sortie de données sur son support de données électronique et/ou une interface de sortie pour la transmission de données à un système de communication sans fil.

**19.** Dispositif selon une des revendications 14 à 18,
caractérisé en outre en ce que
l'appareil de commande (50) renferme un dispositif de mémoire pour le stockage de données ainsi que des moyens pour le remise à zéro du dispositif de mémoire.

Fig. 1

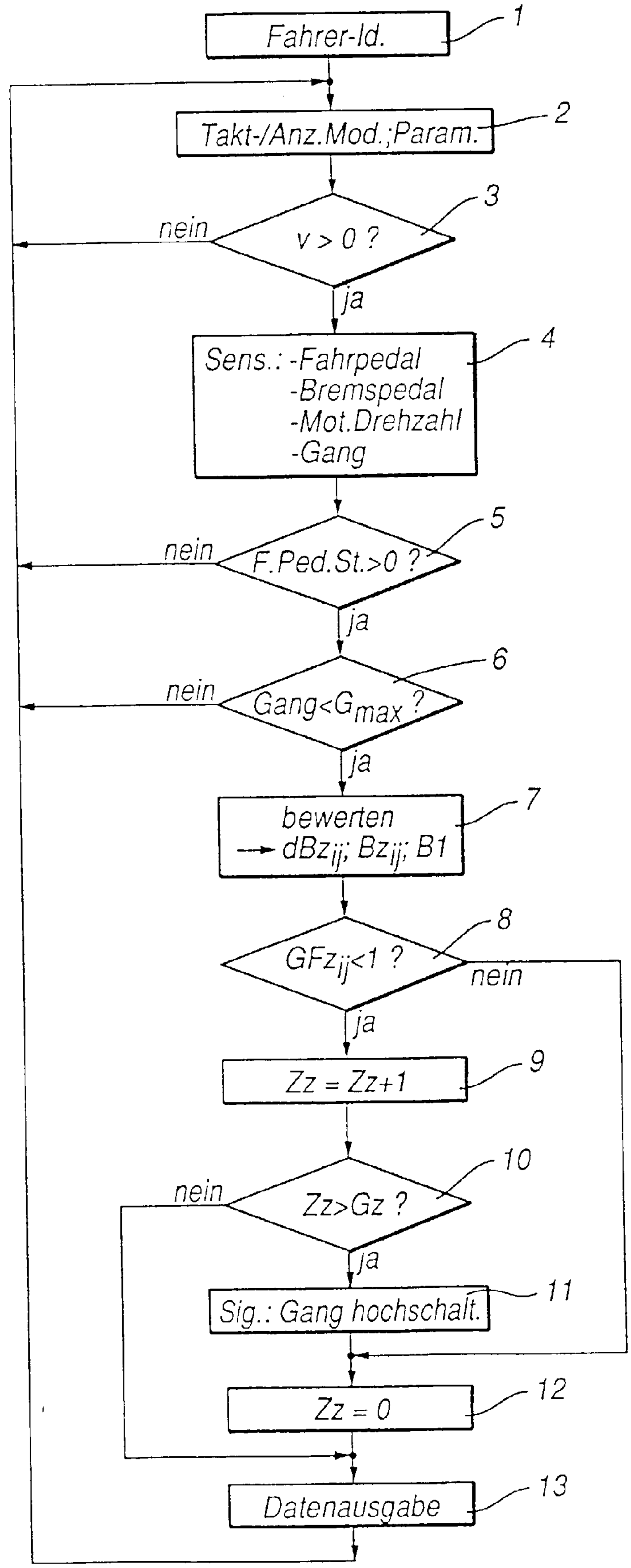
Fahrer-Id.
1
Takt-/Anz.Mod.;Param.
2
v > 0 ?
3
nein
ja
Sens.: -Fahrpedal
-Bremspedal
-Mot.Drehzahl
-Gang
4
F.Ped.St.>0 ?
5
nein
ja
Gang<Gmax ?
6
nein
ja
bewerten
dBzij; Bzij; B1
7
GFzij<1 ?
8
nein
ja
Zz = Zz+1
9
Zz>Gz ?
10
nein
ja
Sig.: Gang hochschalt.
11
Zz = 0
12
Datenausgabe
13

Fig. 2

| Lastbereich \ Drehzahlbereich | 1 | ... | j | ... | Mz |
|---|---|---|---|---|---|
| 1 | $GFz_{11}$ | | | | $GFz_{1Mz}$ |
| ⋮ | | | | | |
| i | | | $GFz_{ij}$ | | |
| ⋮ | | | | | |
| Nz | $GFz_{Nz1}$ | | | | $GFz_{NzMz}$ |

Fig. 3

| Lastbereich \ Drehzahlbereich | 1 | ... | j | ... | Mz |
|---|---|---|---|---|---|
| 1 | $Bz_{11}$ | | | | $Bz_{1Mz}$ |
| ⋮ | | | | | |
| i | | | $Bz_{ij}$ | | |
| ⋮ | | | | | |
| Nz | $Bz_{Nz1}$ | | | | $Bz_{NzMz}$ |

Fig. 4

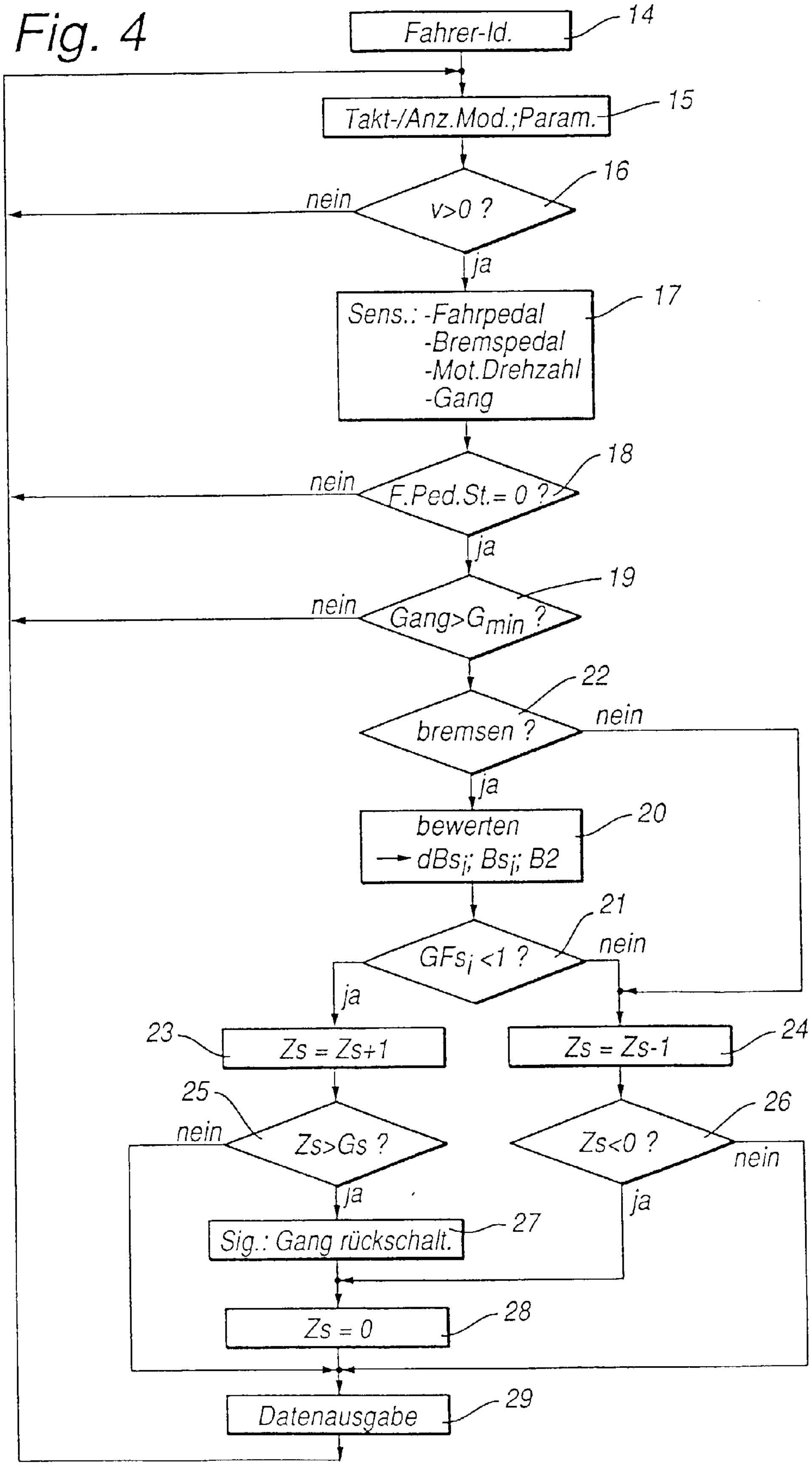
Fahrer-Id.
14
Takt-/Anz.Mod.;Param.
15
v>0 ?
16
nein
ja
Sens.: -Fahrpedal
-Bremspedal
-Mot.Drehzahl
-Gang
17
F.Ped.St.= 0 ?
18
nein
ja
Gang>Gmin ?
19
nein
bremsen ?
22
nein
ja
bewerten
→ dBsi; Bsi; B2
20
GFsi <1 ?
21
nein
ja
Zs = Zs+1
23
Zs = Zs-1
24
Zs>Gs ?
25
nein
ja
Zs<0 ?
26
nein
ja
Sig.: Gang rückschalt.
27
Zs = 0
28
Datenausgabe
29

Fig. 5

| Last-bereich | Drehzahl-teilbereich 1 | ... | Drehzahl-teilbereich i | ... | Drehzahl-teilbereich Xs |
|---|---|---|---|---|---|
| Fahrpedal-stellung null | $GFs_1$ | ... | $GFs_i$ | ... | $GFs_{Xs}$ |

Fig. 6

| Last-bereich | Drehzahl-teilbereich 1 | ... | Drehzahl-teilbereich i | ... | Drehzahl-teilbereich Xs |
|---|---|---|---|---|---|
| Fahrpedal-stellung null | $Bs_1$ | ... | $Bs_i$ | ... | $Bs_{Xs}$ |

Fig. 8

| Verzög.-teilbereich 1 | ... | Verzög.-teilbereich i | ... | Verzög.-teilbereich Ve |
|---|---|---|---|---|
| $GFv_1$ | ... | $GFv_i$ | ... | $GFv_{Ve}$ |

Fig. 9

| Verzög.-teilbereich 1 | ... | Verzög.-teilbereich i | ... | Verzög.-teilbereich Ve |
|---|---|---|---|---|
| $Bv_1$ | ... | $Bv_i$ | ... | $Bv_{Ve}$ |

Fig. 7

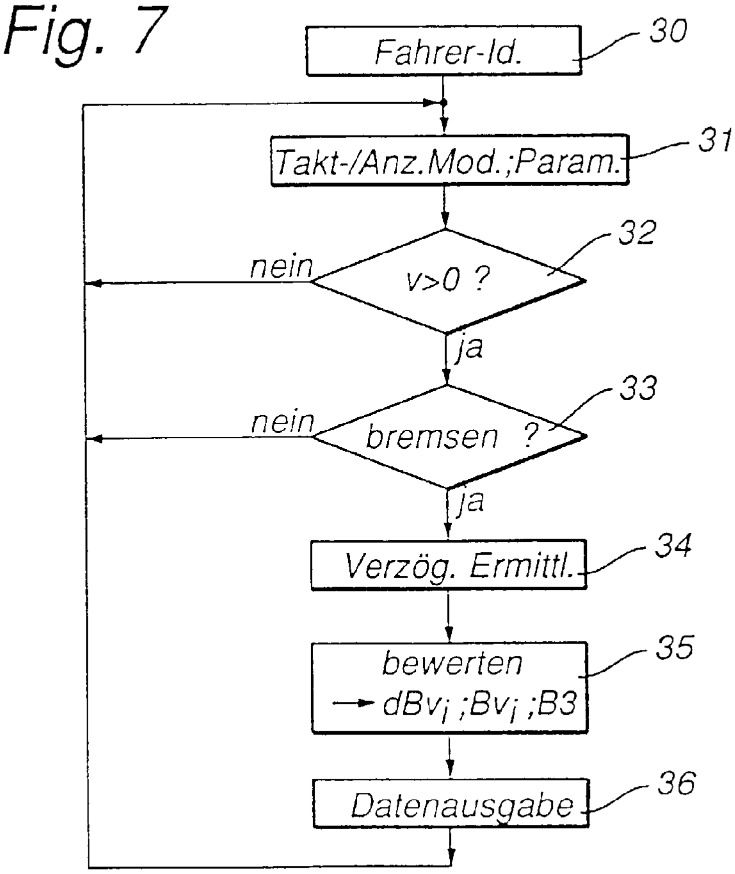
Fahrer-Id.
30
Takt-/Anz.Mod.;Param.
31
nein
v>0 ?
32
ja
nein
bremsen ?
33
ja
Verzög. Ermittl.
34
bewerten
→ dBvi ;Bvi ;B3
35
Datenausgabe
36

Fig. 10

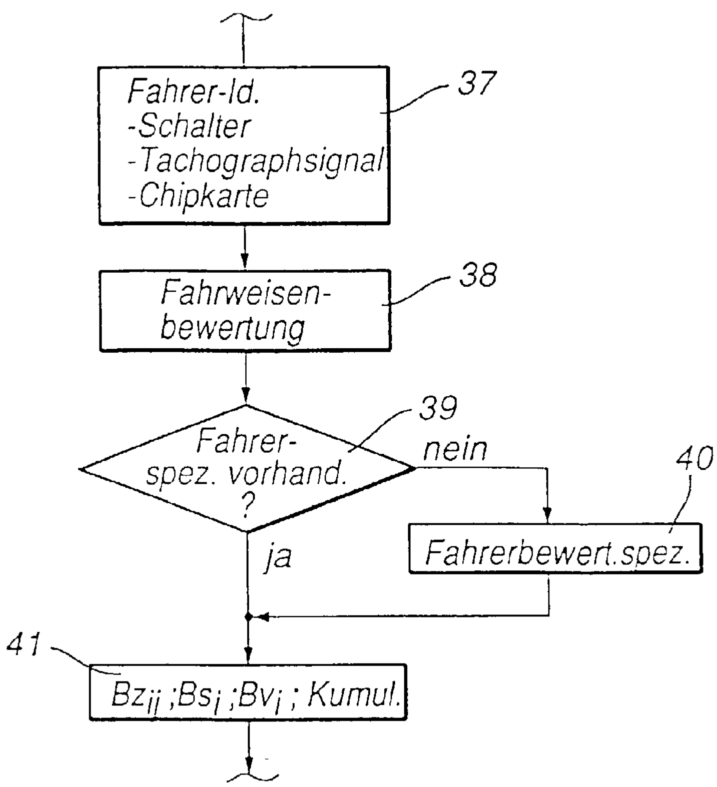
Fahrer-Id.
-Schalter
-Tachographsignal
-Chipkarte
37
Fahrweisen-
bewertung
38
Fahrer-
spez. vorhand.
?
39
nein
40
Fahrerbewert.spez.
ja
41
Bzij ;Bsi ;Bvi ; Kumul.

Fig. 11

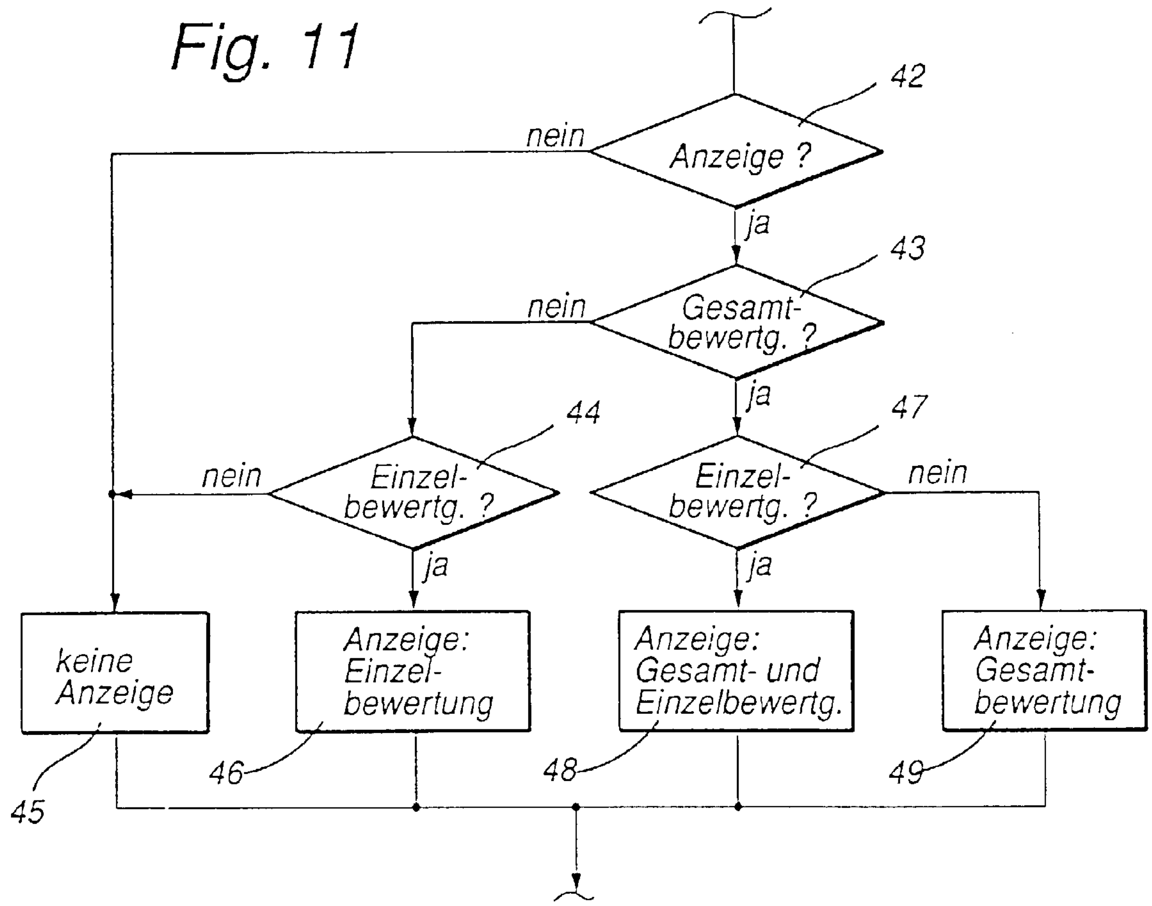
42
Anzeige ?
nein
ja
43
Gesamt-
bewertg. ?
nein
ja
44
Einzel-
bewertg. ?
nein
ja
47
Einzel-
bewertg. ?
nein
ja
keine
Anzeige
Anzeige:
Einzel-
bewertung
Anzeige:
Gesamt- und
Einzelbewertg.
Anzeige:
Gesamt-
bewertung
45
46
48
49

Fig. 12

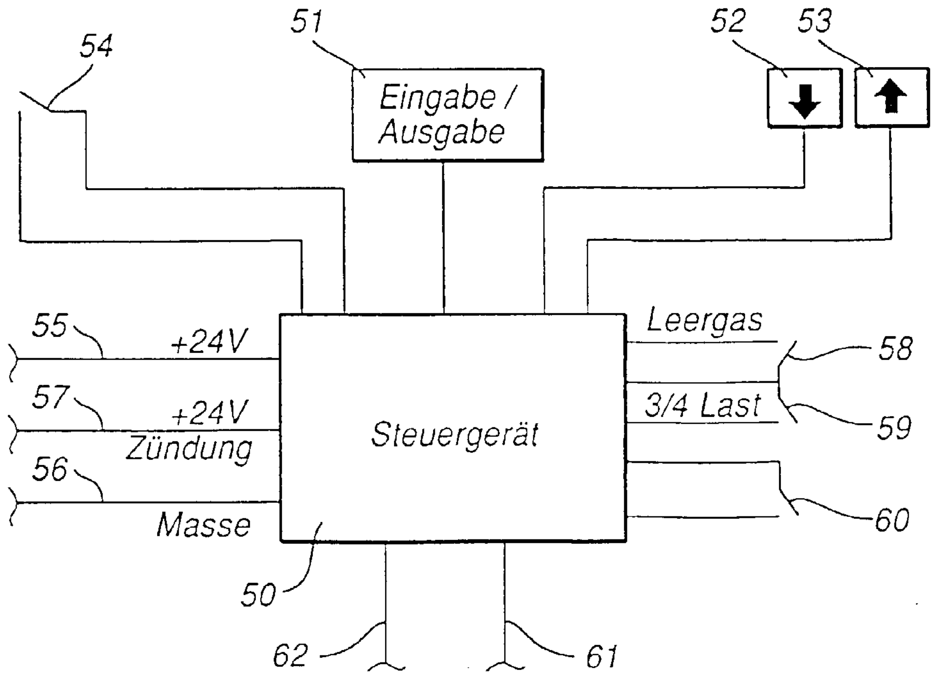
54
51
Eingabe /
Ausgabe
52
53
55
+24V
57
+24V
Zündung
56
Masse
Steuergerät
Leergas
3/4 Last
58
59
60
50
62
61